# EUROPEAN PATENT APPLICATION

(11) **EP 4 529 318 A1**
(43) Date of publication of application: **26.03.2025**
(21) Application number: 23815145.0
(22) Date of filing: 29.05.2023
(51) Int. Cl.: H04W 72/04

(54) **DATA TRANSMISSION METHOD, APPARATUS, AND SYSTEM**

(30) Priority: 02.06.2022 CN 202210621531
(71) Applicant: Huawei Technologies Co., Ltd., Shenzhen, Guangdong 518129 (CN)
(72) Inventor: PENG, Wenjie, Shenzhen, Guangdong 518129 (CN)
(74) Representative: Thun, Clemens
(86) International application number: PCT/CN2023/096843
(87) International publication number: WO 2023/231965

(57) **Abstract**

Embodiments of this application provide a data transmission method, an apparatus, and a system. The method includes: A network device sends information about a first resource to a first terminal device, where the information about the first resource indicates that the first resource is used to transmit a first service of the first terminal device. The network device sends information about a second resource to a second terminal device, where the information about the second resource indicates that the second resource is used to transmit the first service. The network device receives the first service from the first terminal device via the second terminal device. In this way, when the first terminal device sends data of the first service to the network device via the second terminal device, the first terminal device may directly send the data of the first service by using the first resource, and the second terminal device may directly send the data of the first service to the network device by using the second resource, so that the data of the first service is directly transmitted based on the first resource and the second resource, thereby reducing a transmission delay of the data of the first service, and improving user experience.

## Description

This application claims priority to Chinese Patent Application No. 202210621531.7, filed with the China National Intellectual Property Administration on June 2, 2022 and entitled "DATA TRANSMISSION METHOD, APPARATUS, AND SYSTEM", which is incorporated herein by reference in its entirety.

### TECHNICAL FIELD

Embodiments of this application relate to the field of communication technologies, and more specifically, to a data transmission method, an apparatus, and a system.

### BACKGROUND

One user equipment (user equipment, UE) (for example, referred to as a remote UE) may access a network via another UE (for example, referred to as a relay UE). In a possible scenario, the relay UE is connected to the remote UE through a radio interface (for example, a proximity-based services communication 5 (proximity-based services communication 5, PC5) interface), the relay UE is connected to a network device through a radio interface (for example, a Uu interface), and the remote UE may establish a connection to the network device via the relay UE, to perform data transmission.

In a possible data transmission mode, when the remote UE is to transmit uplink data, the remote UE sends the uplink data to the relay UE that provides a relay service for the remote UE. After receiving the uplink data, the relay UE requests an uplink resource from the network device. After the relay UE receives the uplink resource scheduled by the network device, the uplink resource may be preferentially used to transmit other high-priority data (for example, uplink data of the relay UE, or for another example, uplink data of another remote UE). In this case, the uplink resource scheduled by the network device is not used to send the uplink data of the remote UE. As a result, an overall uplink transmission delay of the remote UE significantly increases, and experience of the remote UE is affected.

This application provides a data transmission method, an apparatus, and a system, to reduce a transmission delay of uplink data of a remote UE.

According to a first aspect, a data transmission method is provided. The method may be performed by a network device, or may be performed by a component (for example, a chip or a circuit) of a network device. This is not limited. For ease of description, an example in which the method is performed by the network device is used below for description.

The method may include: The network device sends information about a first resource to a first terminal device, where the information about the first resource indicates that the first resource is used to transmit a first service of the first terminal device, and the first resource is used to transmit the first service between the first terminal device and a second terminal device. The network device sends information about a second resource to the second terminal device, where the information about the second resource indicates that the second resource is used to transmit the first service, and the second resource is used to transmit the first service between the network device and the second terminal device. The network device receives the first service from the first terminal device via the second terminal device.

For example, the first resource is used to transmit the first service between the first terminal device and the second terminal device. In other words, the first terminal device sends the first service to the second terminal device by using the first resource, and correspondingly, the second terminal device receives the first service from the first terminal device by using the first resource.

For example, the second resource is used to transmit the first service between the network device and the second terminal device. In other words, the second terminal device sends the first service to the network device by using the second resource, and correspondingly, the network device receives the first service from the second terminal device by using the second resource.

For example, the network device receives the first service from the first terminal device via the second terminal device. In other words, the network device receives data of the first service from the first terminal device via the second terminal device.

Based on the foregoing technical solution, the network device may jointly configure the first resource and the second resource for the first service of the first terminal device. When the first terminal device sends the data of the first service to the network device via the second terminal device, the first terminal device may directly send the data of the first service by using the first resource, and the second terminal device may directly send the data of the first service to the network device by using the second resource, so that the data of the first service is directly transmitted based on the first resource and the second resource, thereby reducing a transmission delay of the data of the first service, and improving user experience.

In some implementations, the first service has a first correspondence with the first resource.

In some implementations, the first correspondence is a correspondence between a quality of service QoS flow corresponding to the first service and a first logical channel. The first logical channel is a logical channel using the first resource. The first logical channel is a corresponding logical channel for transmitting data of the first service between the first terminal device and the second terminal device.

Based on the foregoing technical solution, the QoS flow corresponding to the first service has the correspondence with the first logical channel. In this way, data on the first logical channel can be the data of the first service, and the first resource can be totally used to transmit the data of the first service as much as possible, to ensure transmission performance for the data of the first service.

In some implementations, the method further includes: The network device sends the first correspondence to the first terminal device.

In some implementations, that the information about the first resource indicates that the first resource is used to transmit the first service includes: The information about the first resource indicates that the first logical channel uses the first resource. The first logical channel is the corresponding logical channel for transmitting the data of the first service between the first terminal device and the second terminal device.

Based on the foregoing technical solution, after configuring the first resource for the first service, the network device may further send the information about the first resource to the first terminal device, where the information about the first resource indicates that the corresponding logical channel (that is, the first logical channel) for transmitting the data of the first service between the first terminal device and the second terminal device uses the first resource. In this way, the first resource can be used to transmit the data of the first service, to ensure the transmission performance for the data of the first service as much as possible.

In some implementations, the first service has a second correspondence with the second resource.

In some implementations, the second correspondence is a correspondence between a data radio bearer corresponding to the first service and a second logical channel. The second logical channel is a logical channel using the second resource. The second logical channel is a corresponding logical channel for transmitting the data of the first service between the second terminal device and the network device.

Based on the foregoing technical solution, the data radio bearer corresponding to the first service has the correspondence with the second logical channel. In this way, data on the second logical channel can be the data of the first service, and the second resource can be totally used to transmit the data of the first service as much as possible, to ensure the transmission performance for the data of the first service.

In some implementations, the method further includes: The network device sends the second correspondence to the second terminal device.

In some implementations, that the information about the second resource indicates that the second resource is used to transmit the first service includes: The information about the second resource indicates that the second logical channel uses the second resource. The second logical channel is the corresponding logical channel for transmitting the data of the first service between the second terminal device and the network device.

Based on the foregoing technical solution, after configuring the second resource for the first service, the network device may further send the information about the second resource to the second terminal device, where the information about the second resource indicates that the corresponding logical channel (that is, the second logical channel) for transmitting the data of the first service between the second terminal device and the network device uses the second resource. In this way, the second resource can be used to transmit the data of the first service, to ensure the transmission performance for the data of the first service as much as possible.

In some implementations, the method further includes: The network device sends information about a third resource to the first terminal device, where the information about the third resource indicates that the third resource is used to transmit the first service, and the third resource is used to transmit the first service between the network device and the first terminal device.

For example, the third resource is used to transmit the first service between the network device and the first terminal device. In other words, the first terminal device sends the first service to the network device by using the third resource, and correspondingly, the network device receives the first service from the first terminal device by using the third resource.

Based on the foregoing technical solution, a transmission resource jointly configured by the network device for the first service of the first terminal device further includes the third resource, and the third resource may be used to transmit the first service between the first terminal device and the network device. In this way, if the first terminal device further directly sends data of the first service to the network device, the first terminal device may directly send the data of the first service to the network device by using the third resource, to reduce a transmission delay of the data of the first service and improve user experience.

In some implementations, the first service has a third correspondence with the third resource.

In some implementations, the third correspondence is a correspondence between the quality of service QoS flow corresponding to the first service and a third logical channel. The third logical channel is a logical channel using the third resource. The third logical channel is a corresponding logical channel for transmitting the data of the first service between the first terminal device and the network device.

Based on the foregoing technical solution, the QoS flow corresponding to the first service has the correspondence with the third logical channel. In this way, data on the third logical channel can be the data of the first service, and the third resource can be totally used to transmit the data of the first service as much as possible, to ensure transmission performance for the data of the first service.

In some implementations, the method further includes: The network device sends the third correspondence to the first terminal device.

In some implementations, that the information about the third resource indicates that the third resource is used to transmit the first service includes: The information about the third resource indicates that the third logical channel uses the third resource. The third logical channel is the corresponding logical channel for transmitting the data of the first service between the first terminal device and the network device.

Based on the foregoing technical solution, after configuring the third resource for the first service, the network device may further send the information about the third resource to the first terminal device, where the information about the third resource indicates that the corresponding logical channel (that is, the third logical channel) for transmitting the data of the first service between the first terminal device and the network device uses the third resource. In this way, the third resource can be used to transmit the data of the first service, to ensure the transmission performance for the data of the first service as much as possible.

In some implementations, a periodicity of the second resource is the same as a periodicity of the first resource, or a periodicity of the second resource is in an integer multiple relationship with a periodicity of the first resource.

In some implementations, the first service is a periodically transmitted service. The periodicity of the second resource and/or the periodicity of the first resource are/is the same as a periodicity of the first service, or the periodicity of the second resource and/or the periodicity of the first resource are/is an integer multiple of a periodicity of the first service.

In some implementations, the first service is a periodically transmitted service. A periodicity of the third resource satisfies at least one of the following: The periodicity of the third resource is the same as a periodicity of the first resource, or the periodicity of the third resource is in an integer multiple relationship with a periodicity of the first resource; the periodicity of the third resource is the same as a periodicity of the second resource, or the periodicity of the third resource is in an integer multiple relationship with a periodicity of the second resource; or the periodicity of the third resource is the same as a periodicity of the first service, or the periodicity of the third resource is an integer multiple of a periodicity of the first service.

In some implementations, a time domain resource start position of the first resource is after a time domain resource start position of the second resource.

Based on the foregoing technical solution, after the second terminal device receives the data of the first service from the first terminal device, there can be sufficient time to process the data of the first service on a second terminal device side.

In some implementations, a time gap between the time domain start position of the second resource and the time domain start position of the first resource is t time units, and t is an integer greater than or equal to 1.

In some implementations, the first service is a periodically transmitted service.

In some implementations, the second resource is an uplink configured grant UL CG resource, and the first resource is a sidelink configured grant SL CG resource.

In some implementations, the third resource is an uplink configured grant UL CG resource.

According to a second aspect, a data transmission method is provided. The method may be performed by a terminal device, or may be performed by a component (for example, a chip or a circuit) of a terminal device. This is not limited. For ease of description, an example in which the method is performed by a first terminal device and a second terminal device is used below for description.

The method may include: The first terminal device receives information about a first resource from a network device, where the information about the first resource indicates that the first resource is used to transmit a first service of the first terminal device, and the first resource is used to transmit the first service between the first terminal device and the second terminal device. The second terminal device receives information about a second resource from the network device, where the information about the second resource indicates that the second resource is used to transmit the first service, and the second resource is used to transmit the first service between the network device and the second terminal device. The first terminal device sends the first service to the second terminal device by using the first resource. The second terminal device receives the first service, and sends the first service to the network device by using the second resource.

In some implementations, the first service has a first correspondence with the first resource.

In some implementations, the first correspondence is a correspondence between a quality of service QoS flow corresponding to the first service and a first logical channel. The first logical channel is a logical channel using the first resource. The first logical channel is a corresponding logical channel for transmitting data of the first service between the first terminal device and the second terminal device.

In some implementations, the method further includes: The first terminal device receives the first correspondence from the network device.

In some implementations, that the information about the first resource indicates that the first resource is used to transmit the first service includes: The information about the first resource indicates that the first logical channel uses the first resource. The first logical channel is the corresponding logical channel for transmitting the data of the first service between the first terminal device and the second terminal device.

In some implementations, the first service has a second correspondence with the second resource.

In some implementations, the second correspondence is a correspondence between a data radio bearer corresponding to the first service and a second logical channel. The second logical channel is a logical channel using the second resource. The second logical channel is a corresponding logical channel for transmitting the data of the first service between the second terminal device and the network device.

In some implementations, the method further includes: The second terminal device receives the second correspondence from the network device.

In some implementations, that the information about the second resource indicates that the second resource is used to transmit the first service includes: The information about the second resource indicates that the second logical channel uses the second resource. The second logical channel is the corresponding logical channel for transmitting the data of the first service between the second terminal device and the network device.

In some implementations, the method further includes: The first terminal device receives information about a third resource from the network device, where the information about the third resource indicates that the third resource is used to transmit the first service. The first terminal device sends the first service to the network device by using the third resource.

In some implementations, the first service has a third correspondence with the third resource.

In some implementations, the third correspondence is a correspondence between the quality of service QoS flow corresponding to the first service and a third logical channel. The third logical channel is a logical channel using the third resource. The third logical channel is a corresponding logical channel for transmitting the data of the first service between the first terminal device and the network device.

In some implementations, the method further includes: The first terminal device receives the third correspondence from the network device.

In some implementations, that the information about the third resource indicates that the third resource is used to transmit the first service includes: The information about the third resource indicates that the third logical channel uses the third resource. The third logical channel is the corresponding logical channel for transmitting the data of the first service between the first terminal device and the network device.

In some implementations, a periodicity of the second resource is the same as a periodicity of the first resource, or a periodicity of the second resource is in an integer multiple relationship with a periodicity of the first resource.

In some implementations, the first service is a periodically transmitted service. The periodicity of the second resource and/or the periodicity of the first resource are/is the same as a periodicity of the first service, or the periodicity of the second resource and/or the periodicity of the first resource are/is an integer multiple of a periodicity of the first service.

In some implementations, the first service is a periodically transmitted service. A periodicity of the third resource satisfies at least one of the following: The periodicity of the third resource is the same as a periodicity of the first resource, or the periodicity of the third resource is in an integer multiple relationship with a periodicity of the first resource; the periodicity of the third resource is the same as a periodicity of the second resource, or the periodicity of the third resource is in an integer multiple relationship with a periodicity of the second resource; or the periodicity of the third resource is the same as a periodicity of the first service, or the periodicity of the third resource is an integer multiple of a periodicity of the first service.

In some implementations, a time domain start position of the second resource is after a time domain start position of the first resource.

In some implementations, a time gap between the time domain start position of the second resource and the time domain start position of the first resource is t time units, and t is an integer greater than or equal to 1.

In some implementations, the first service is a periodically transmitted service.

In some implementations, the second resource is an uplink configured grant UL CG resource, and the first resource is a sidelink configured grant SL CG resource.

In some implementations, the third resource is an uplink configured grant UL CG resource.

For beneficial effects of the second aspect and the possible designs, refer to related descriptions of the first aspect. Details are not described herein again.

According to a third aspect, a data transmission method is provided. The method may be performed by a terminal device, or may be performed by a component (for example, a chip or a circuit) of a terminal device. This is not limited. For ease of description, an example in which the method is performed by a first terminal device is used below for description.

The method may include: The first terminal device receives information about a first resource from a network device, where the information about the first resource indicates that the first resource is used to transmit a first service of the first terminal device, and the first resource is used to transmit the first service between the first terminal device and a second terminal device. The first terminal device sends the first service to the network device via the second terminal device, where a resource used by the first terminal device to send the first service to the second terminal device is the first resource, a resource used by the second terminal device to send the first service to the network device is a second resource, and the second resource is a resource that is configured by the network device and that is used to transmit the first service between the network device and the second terminal device.

In some implementations, the first service has a first correspondence with the first resource.

In some implementations, the first correspondence is a correspondence between a quality of service QoS flow corresponding to the first service and a first logical channel. The first logical channel is a logical channel using the first resource. The first logical channel is a corresponding logical channel for transmitting data of the first service between the first terminal device and the second terminal device.

In some implementations, the method further includes: The first terminal device receives the first correspondence from the network device.

In some implementations, that the information about the first resource indicates that the first resource is used to transmit the first service includes: The information about the first resource indicates that the first logical channel uses the first resource. The first logical channel is the corresponding logical channel for transmitting the data of the first service between the first terminal device and the second terminal device.

In some implementations, the method further includes: The first terminal device receives information about a third resource from the network device, where the information about the third resource indicates that the third resource is used to transmit the first service, and the third resource is used to transmit the first service between the network device and the first terminal device. The first terminal device sends the first service to the network device by using the third resource.

**In** some implementations, the first service has a third correspondence with the third resource.

**In** some implementations, the third correspondence is a correspondence between the quality of service QoS flow corresponding to the first service and a third logical channel. The third logical channel is a logical channel using the third resource. The third logical channel is a corresponding logical channel for transmitting the data of the first service between the first terminal device and the network device.

**In** some implementations, the method further includes: The first terminal device receives the third correspondence from the network device.

**In** some implementations, that the information about the third resource indicates that the third resource is used to transmit the first service includes: The information about the third resource indicates that the third logical channel uses the third resource. The third logical channel is the corresponding logical channel for transmitting the data of the first service between the first terminal device and the network device.

**In** some implementations, a periodicity of the second resource is the same as a periodicity of the first resource, or a periodicity of the second resource is in an integer multiple relationship with a periodicity of the first resource.

**In** some implementations, the first service is a periodically transmitted service. The periodicity of the second resource and/or the periodicity of the first resource are/is the same as a periodicity of the first service, or the periodicity of the second resource and/or the periodicity of the first resource are/is an integer multiple of a periodicity of the first service.

**In** some implementations, the first service is a periodically transmitted service. A periodicity of the third resource satisfies at least one of the following: The periodicity of the third resource is the same as a periodicity of the first resource, or the periodicity of the third resource is in an integer multiple relationship with a periodicity of the first resource; the periodicity of the third resource is the same as a periodicity of the second resource, or the periodicity of the third resource is in an integer multiple relationship with a periodicity of the second resource; or the periodicity of the third resource is the same as a periodicity of the first service, or the periodicity of the third resource is an integer multiple of a periodicity of the first service.

**In** some implementations, a time domain start position of the second resource is after a time domain start position of the first resource.

**In** some implementations, a time gap between the time domain start position of the second resource and the time domain start position of the first resource is t time units, and t is an integer greater than or equal to 1.

In some implementations, the first service is a periodically transmitted service.

In some implementations, the second resource is an uplink configured grant UL CG resource, and the first resource is a sidelink configured grant SL CG resource.

In some implementations, the third resource is an uplink configured grant UL CG resource.

For beneficial effects of the third aspect and the possible designs, refer to related descriptions of the first aspect. Details are not described herein again.

According to a fourth aspect, a data transmission method is provided. The method may be performed by a terminal device, or may be performed by a component (for example, a chip or a circuit) of a terminal device. This is not limited. For ease of description, an example in which the method is performed by a first terminal device is used below for description.

The method may include: The first terminal device receives information about a third resource from a network device, where the information about the third resource indicates that the third resource is used to transmit a first service of the first terminal device, and the third resource is used to transmit the first service between the network device and the first terminal device. The first terminal device sends first data of the first service to the network device by using the third resource. The first terminal device sends second data of the first service to the network device via a second terminal device, where a resource used by the second terminal device to send the first service to the network device is a second resource, the second resource is a resource that is configured by the network device and that is used to transmit the first service between the network device and the second terminal device, and the first data is the same as or different from the second data.

For example, that the first data is the same as the second data may indicate that the first data is partially the same as the second data, or may indicate that the first data is totally the same as the second data.

For example, that the first data is different from the second data may indicate that the first data is partially different from the second data, or may indicate that the first data is totally different from the second data.

Based on the foregoing technical solution, for data to be sent by the first terminal device to the network device via the second terminal device and directly, the network device may jointly configure a transmission resource for the data. Specifically, the network device configures a resource used by the first terminal device to send the data to the second terminal device, and the network device configures a resource used by the first terminal device to directly send the data to the network device. In this way, when the data needs to be transmitted, the third resource and the second resource that are jointly configured may be directly used for transmission.

In some implementations, the first service has a third correspondence with the third resource.

In some implementations, the third correspondence is a correspondence between a quality of service QoS flow corresponding to the first service and a third logical channel. The third logical channel is a logical channel using the third resource. The third logical channel is a corresponding logical channel for transmitting the data of the first service between the first terminal device and the network device.

In some implementations, the method further includes: The first terminal device receives the third correspondence from the network device.

In some implementations, that the information about the third resource indicates that the third resource is used to transmit the first service includes: The information about the third resource indicates that the third logical channel uses the third resource. The third logical channel is the corresponding logical channel for transmitting the data of the first service between the first terminal device and the network device.

In some implementations, the first service is a periodically transmitted service. A periodicity of the third resource satisfies at least one of the following: The periodicity of the third resource is the same as a periodicity of a first resource, or the periodicity of the third resource is in an integer multiple relationship with a periodicity of a first resource; the periodicity of the third resource is the same as a periodicity of the second resource, or the periodicity of the third resource is in an integer multiple relationship with a periodicity of the second resource; or the periodicity of the third resource is the same as a periodicity of the first service, or the periodicity of the third resource is an integer multiple of a periodicity of the first service.

In some implementations, the first service is a periodically transmitted service.

In some implementations, the second resource is an uplink configured grant UL CG resource, and the third resource is an uplink configured grant UL CG resource.

For beneficial effects of the fourth aspect and the possible designs, refer to related descriptions of the first aspect. Details are not described herein again.

According to a fifth aspect, a data transmission method is provided. The method may be performed by a terminal device, or may be performed by a component (for example, a chip or a circuit) of a terminal device. This is not limited. For ease of description, an example in which the method is performed by a second terminal device is used below for description.

The method may include: The second terminal device receives information about a second resource from a network device, where the information about the second resource indicates that the second resource is used to transmit a first service of a first terminal device, and the second resource is used to transmit the first service between the network device and the second terminal device. The second terminal device receives the first service sent by the first terminal device by using a first resource, and forwards the first service to the network device by using the second resource, where the first resource is a resource that is configured by the network device and that is used to transmit the first service between the first terminal device and the second terminal device.

In some implementations, the first service has a second correspondence with the second resource.

In some implementations, the second correspondence is a correspondence between a data radio bearer corresponding to the first service and a second logical channel. The second logical channel is a logical channel using the second resource. The second logical channel is a corresponding logical channel for transmitting data of the first service between the second terminal device and the network device.

In some implementations, the method further includes: The second terminal device receives the second correspondence from the network device.

In some implementations, that the information about the second resource indicates that the second resource is used to transmit the first service includes: The information about the second resource indicates that the second logical channel uses the second resource. The second logical channel is the corresponding logical channel for transmitting the data of the first service between the second terminal device and the network device.

In some implementations, a periodicity of the second resource is the same as a periodicity of the first resource, or a periodicity of the second resource is in an integer multiple relationship with a periodicity of the first resource.

In some implementations, the first service is a periodically transmitted service. The periodicity of the second resource and/or the periodicity of the first resource are/is the same as a periodicity of the first service, or the periodicity of the second resource and/or the periodicity of the first resource are/is an integer multiple of a periodicity of the first service.

In some implementations, a time domain start position of the second resource is after a time domain start position of the first resource.

In some implementations, a time gap between the time domain start position of the second resource and the time domain start position of the first resource is t time units, and t is an integer greater than or equal to 1.

In some implementations, the first service is a periodically transmitted service.

In some implementations, the second resource is an uplink configured grant UL CG resource, and the first resource is a sidelink configured grant SL CG resource.

For beneficial effects of the fifth aspect and the possible designs, refer to related descriptions of the first aspect. Details are not described herein again.

According to a sixth aspect, a data transmission method is provided. The method may be performed by a terminal device, or may be performed by a component (for example, a chip or a circuit) of a terminal device. This is not limited. For ease of description, an example in which the method is performed by a first terminal device and a second terminal device is used below for description.

The method may include: The first terminal device receives information about a third resource from a network device, where the information about the third resource indicates that the third resource is used to transmit a first service of the first terminal device. The second terminal device receives information about a second resource from the network device, where the information about the second resource indicates that the second resource is used to transmit the first service. The first terminal device sends first data of the first service to the network device by using the third resource, and the first terminal device sends second data of the first service to the second terminal device. The second terminal device receives the second data of the first service, and sends the second data of the first service to the network device by using the second resource, where the first data is the same as or different from the second data.

For example, that the first data is the same as the second data may indicate that the first data is partially the same as the second data, or may indicate that the first data is totally the same as the second data.

For example, that the first data is different from the second data may indicate that the first data is partially different from the second data, or may indicate that the first data is totally different from the second data.

In some implementations, the first service has a third correspondence with the third resource.

In some implementations, the third correspondence is a correspondence between a quality of service QoS flow corresponding to the first service and a third logical channel. The third logical channel is a logical channel using the third resource. The third logical channel is a corresponding logical channel for transmitting the data of the first service between the first terminal device and the network device.

In some implementations, the method further includes: The first terminal device receives the third correspondence from the network device.

In some implementations, that the information about the third resource indicates that the third resource is used to transmit the first service includes: The information about the third resource indicates that the third logical channel uses the third resource. The third logical channel is the corresponding logical channel for transmitting the data of the first service between the first terminal device and the network device.

In some implementations, the first service has a second correspondence with the second resource.

In some implementations, the second correspondence is a correspondence between a data radio bearer corresponding to the first service and a second logical channel. The second logical channel is a logical channel using the second resource. The second logical channel is a corresponding logical channel for transmitting data of the first service between the second terminal device and the network device.

In some implementations, the method further includes: The second terminal device receives the second correspondence from the network device.

In some implementations, that the information about the second resource indicates that the second resource is used to transmit the first service includes: The information about the second resource indicates that the second logical channel uses the second resource. The second logical channel is the corresponding logical channel for transmitting the data of the first service between the second terminal device and the network device.

In some implementations, the first service is a periodically transmitted service. A periodicity of the third resource satisfies at least one of the following: The periodicity of the third resource is the same as a periodicity of a first resource, or the periodicity of the third resource is in an integer multiple relationship with a periodicity of a first resource; the periodicity of the third resource is the same as a periodicity of the second resource, or the periodicity of the third resource is in an integer multiple relationship with a periodicity of the second resource; or the periodicity of the third resource is the same as a periodicity of the first service, or the periodicity of the third resource is an integer multiple of a periodicity of the first service.

In some implementations, the first service is a periodically transmitted service.

In some implementations, the second resource is an uplink configured grant UL CG resource, and the third resource is an uplink configured grant UL CG resource.

For beneficial effects of the sixth aspect and the possible designs, refer to related descriptions of the first aspect. Details are not described herein again.

According to a seventh aspect, a data transmission apparatus is provided. The apparatus is configured to perform the method in any one of the possible implementations of the first aspect to the sixth aspect. Specifically, the apparatus may include a unit and/or a module, configured to perform the method in any one of the possible implementations of the first aspect to the sixth aspect, for example, a processing unit and/or a communication unit.

In an implementation, the apparatus is a communication device (for example, a network device or a terminal device). When the apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a network device or a terminal device). When the apparatus is the chip, the chip system, or the circuit used in the communication device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to an eighth aspect, a data transmission apparatus is provided. The apparatus includes at least one processor, configured to execute a computer program or instructions stored in a memory, to perform the method in any one of the possible implementations of the first aspect to the sixth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device (for example, a network device or a terminal device).

In another implementation, the apparatus is a chip, a chip system, or a circuit used in a communication device (for example, a network device or a terminal device).

According to a ninth aspect, this application provides a processor, configured to perform the method according to the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable medium stores program code to be executed by a device, and the program code is used to perform the method in any one of the possible implementations of the first aspect to the sixth aspect.

According to an eleventh aspect, a computer program product including instructions is provided. When the computer program product is run on a computer, the computer is enabled to perform the method in any one of the possible implementations of the first aspect to the sixth aspect.

According to a twelfth aspect, a communication system is provided, including at least one of the foregoing first terminal device, second terminal device, and network device.

### BRIEF DESCRIPTION OF DRAWINGS

FIG. 1 is a diagram of a network architecture applicable to an embodiment of this application;
FIG. 2 is a diagram of a network architecture applicable to another embodiment of this application;
FIG. 3 is a diagram of a PC5 interface and a Uu interface;
(a) and (b) in FIG. 4 are a diagram of a protocol stack for sidelink U2N relay;
FIG. 5 is a diagram of a data transmission method 500 according to an embodiment of this application;
FIG. 6 is a diagram of a data transmission method 600 according to an embodiment of this application;
FIG. 7 is a diagram of an association relationship between a resource #1 and a resource #2 in time domain;
FIG. 8 is a diagram of a data transmission method 800 according to another embodiment of this application;
FIG. 9 is a diagram of an association relationship between a resource #1 and a resource #3 in time domain;
FIG. 10 is another diagram of an association relationship between a resource #1 and a resource #3 in time domain;
FIG. 11 is a diagram of a protocol stack applicable to an embodiment of this application;
FIG. 12 is another diagram of a protocol stack applicable to an embodiment of this application;
FIG. 13 is a diagram of a data transmission method 1300 according to still another embodiment of this application;
FIG. 14 is a diagram of an association relationship between a resource #1, a resource #2, and a resource #3 in time domain;
FIG. 15 is a diagram of a data transmission apparatus 1500 according to an embodiment of this application;
FIG. 16 is a diagram of another data transmission apparatus 1600 according to an embodiment of this application; and
FIG. 17 is a diagram of a chip system 1700 according to an embodiment of this application.

### DESCRIPTION OF EMBODIMENTS

The following describes technical solutions in embodiments of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A terminal device in embodiments of this application may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a user with voice/data, for example, a handheld device or a vehicle-mounted device having a wireless connection function. Currently, some examples of the terminal may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device or wearable device connected to a wireless modem, a terminal device in a 5G network, or a terminal device in a future evolved public land mobile network (public land mobile network, PLMN). This is not limited in embodiments of this application.

By way of example, and not limitation, in embodiments of this application, the terminal device may alternatively be a wearable device. The wearable device may also be referred to as a wearable intelligent device, and is a generic term for wearable devices that are developed through intelligent design on daily wearables by using wearable technologies, such as glasses, gloves, watches, clothing, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, the wearable intelligent device includes a full-featured and large-sized device that can implement all or part of functions without depending on a smartphone, for example, a smartwatch or smart glasses, and a device that is dedicated to only one type of application function and needs to be used together with another device such as a smartphone, for example, various smart bands or smart jewelry for monitoring physical signs.

In embodiments of this application, an apparatus configured to implement a function of the terminal device may be a terminal device, or may be an apparatus capable of supporting the terminal device in implementing the function, for example, a chip system or a chip. The apparatus may be installed in the terminal device. In embodiments of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a radio-frequency head (remote radio head, RRH), a central unit (central unit, CU), a distributed unit (distributed unit, DU), and a positioning node. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. A specific technology and a specific device form that are used by the network device are not limited in embodiments of this application.

The base station may be fastened or movable. For example, a helicopter or an uncrewed aerial vehicle may be configured as a mobile base station, and one or more cells may move based on a location of the mobile base station. In other examples, a helicopter or an uncrewed aerial vehicle may be configured as a device for communicating with another base station.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node.

The network device and the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiments of this application.

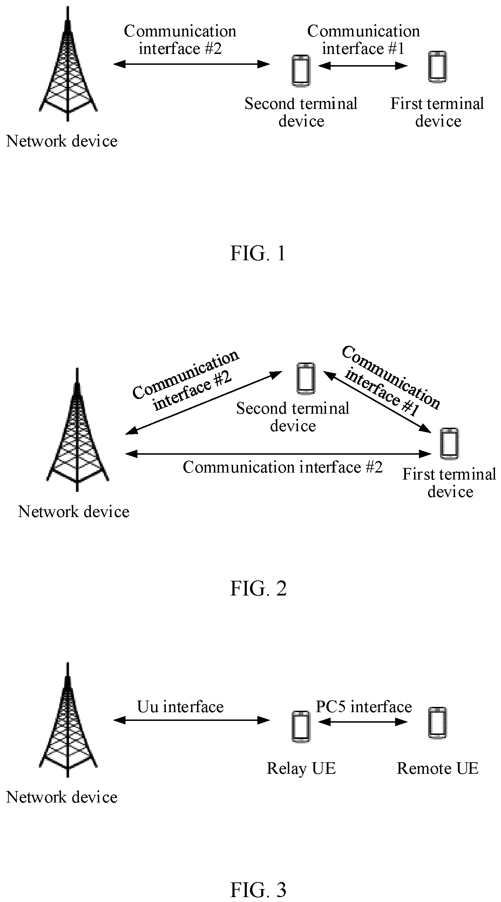

First, a network architecture applicable to this application is briefly described with reference to FIG. 1 and FIG. 2. Details are as follows.

FIG. 1 is a diagram of a network architecture applicable to an embodiment of this application.

As shown in FIG. 1, in an example, the network architecture may include a terminal device, for example, a first terminal device and a second terminal device in FIG. 1. The network architecture may further include a network device. The first terminal device may be referred to as a remote terminal device (remote UE), and the second terminal device may be referred to as a relay terminal device (relay UE). The first terminal device may communicate with the second terminal device through a communication interface #1. The second terminal device may communicate with the network device through a communication interface #2. The first terminal device may communicate with the network device via the second terminal device. As shown in FIG. 1, the first terminal device may communicate with the network device through an indirect (indirect) path (a path that is based on the communication interface #1 and the communication interface #2 in FIG. 1).

For example, the architecture shown in FIG. 1 is used as an example. When sending data to the network device, the first terminal device may first send the data to the second terminal device, and then the second terminal device forwards the data to the network device.

FIG. 2 is a diagram of a network architecture applicable to another embodiment of this application.

As shown in FIG. 2, in an example, the network architecture may include but is not limited to a first terminal device, a second terminal device, and a network device. The first terminal device may be referred to as a remote UE, and the second terminal device may be referred to as a relay UE. The first terminal device may communicate with the second terminal device through a communication interface #1. The second terminal device may communicate with the network device through a communication interface #2. The first terminal device may communicate with the network device through the communication interface #2, or the first terminal device may communicate with the network device via the second terminal device. As shown in FIG. 2, there are two paths between the first terminal device and the network device, where one is an indirect path (a path that is based on the communication interface #1 and the communication interface #2 in FIG. 2) that passes through the second terminal device, and the other is a direct (direct) path (a path that is based on the communication interface #2 in FIG. 2) between the first terminal device and the network device.

For example, the architecture shown in FIG. 2 is used as an example. Data sent by the first terminal device to the network device may be sent to the network device via the second terminal device. Alternatively, data sent by the first terminal device to the network device may be sent to the network device through the communication interface #2 between the first terminal device and the network device. Alternatively, one part of data sent by the first terminal device to the network device is sent to the network device via the second terminal device, and the other part of the data is sent to the network device through the communication interface #2 between the first terminal device and the network device.

In FIG. 1 and FIG. 2, in an example, the communication interface #1 may be a proximity-based services communication 5 (proximity-based services communication 5, PC5) interface, or may be a non-3rd generation partnership project (3rd generation partnership project, 3GPP) interface, for example, a private interface, a wireless fidelity (wireless fidelity, Wi-Fi) interface, a Bluetooth interface, or a wired interface. This is not limited. In an example, the communication interface #2 may be a Uu interface. The Uu interface and the PC5 interface will be described later.

It may be understood that the network architectures shown in FIG. 1 and FIG. 2 are merely examples for description, and a network architecture applicable to embodiments of this application is not limited thereto. For example, the technical solutions in embodiments of this application may be applied to an architecture in which one terminal device (for example, referred to as a remote UE) can communicate with another device (for example, a network device, or for another example, a terminal device) via another terminal device (for example, referred to as a relay UE). For another example, the foregoing architecture may further include another device, for example, a core network device and/or another terminal device. In an example, the core network device may include, for example, an access and mobility management function (access and mobility management function, AMF) network element, a session management function (session management function, SMF) network element, a user plane function (user plane function, UPF) network element, and a policy control function (policy control function, PCF) network element.

It may be further understood that FIG. 1 and FIG. 2 are mainly described by using the terminal devices as an example. This is not limited. Alternatively, the first terminal device and the second terminal device may be two modules on a same physical platform, and the two modules transmit data of a same service. For example, two communication modules are installed on one uncrewed aerial vehicle, and the two communication modules transmit data of a same service.

For ease of understanding of embodiments of this application, several basic concepts in embodiments of this application are briefly described.

It should be understood that the basic concepts described below are briefly described by using basic concepts specified in a current protocol as an example, but embodiments of this application are not limited to being applied only to a currently existing system. Therefore, names appearing when the currently existing system is used as an example for description are all functional descriptions, do not limit specific names, indicate only functions, and may be correspondingly expanded to another system, for example, a 4G system or a future communication system.

### 1. PC5 interface and Uu interface

The Uu interface may be an interface for communication between a UE and a network device. A link between the UE and the network device may be referred to as a Uu link. It may be understood that the Uu link is merely a name for differentiation, and a specific name of the Uu link does not limit the protection scope of this application. It may be further understood that the Uu link represents a connection relationship between the UE and the network device, and is a logical concept rather than a physical entity.

The PC5 interface may be an interface for direct communication between UEs. To be specific, the UEs communicate with each other through a direct link between the UEs rather than an operator network (for example, a base station). A link between the UEs may be referred to as a sidelink (sidelink, SL), or a link between the UEs may be referred to as a PC5 link (PC5 link). In a possible application scenario, in V2X, each vehicle may be considered as a UE, and vehicles (that is, between UEs) may communicate with each other through a PC5 interface rather than an operator network. In this way, a communication delay can be effectively reduced. It may be understood that the PC5 link is merely a name for differentiation, and a specific name of the PC5 link does not limit the protection scope of this application. It may be further understood that the PC5 link represents a connection relationship between the UEs, and is a logical concept rather than a physical entity.

FIG. 3 is a diagram of a PC5 interface and a Uu interface.

As shown in FIG. 3, an interface between a UE (for example, a relay UE in FIG. 3) and a network device is the Uu interface, and an interface between UEs (for example, the relay UE and a remote UE in FIG. 3) is the PC5 interface.

It may be understood that the PC5 interface and the Uu interface are merely examples, and do not constitute a limitation on the protection scope of this application. The communication interface may alternatively have another name. Details are not described herein again.

The PC5 interface may support communication modes such as broadcast, unicast, and multicast. This application mainly relates to the unicast communication mode. The following briefly describes unicast communication.

2. Unicast communication: A unicast connection is first established between two UEs. After the unicast connection is established, the two UEs may perform data communication based on an identifier determined through negotiation. Data may be encrypted, or may not be encrypted. Unicast communication is similar to data communication performed between a UE and a network device after a radio resource control (radio resource control, RRC) connection is established. Compared with broadcast, unicast communication may be performed only between the two UEs that have established the unicast connection.

In unicast communication, when sending data, a UE may send a source identifier and a destination identifier along with the data. The source identifier is used to identify a transmit end, and may be allocated by the transmit end UE. The destination identifier is used to identify a receive end, and may be an identifier allocated by a receive end UE to the unicast connection. The UEs communicate with each other through a PC5 interface.

3. Sidelink UE-to-network (sidelink UE-to-network relay, sidelink U2N relay): It may be an architecture in which a UE provides a network access service for a UE. In a sidelink U2N relay scenario, one UE accesses a network via another UE through unicast communication, so that network coverage is enhanced. In the sidelink U2N relay scenario, a node that performs a relay function may be referred to as a relay UE (relay UE), and a node that accesses the network via the relay UE may be referred to as a remote UE (remote UE). Refer to FIG. 3. It may be understood that the remote UE and the relay UE are merely names for differentiation, and names of the remote UE and the relay UE do not limit the protection scope of embodiments of this application. For example, the remote UE and the relay UE may also be respectively referred to as a first device and a second device, may be respectively referred to as a first node and a second node, or may be respectively referred to as a first module and a second module. For consistency, the following uses the remote UE and the relay UE for description.

The remote UE may access the network via the relay UE in two manners: a single-path manner and a dual-path manner. What FIG. 1 shows may be understood as the single-path manner, and what FIG. 2 shows may be understood as the dual-path manner. It can be learned from FIG. 1 that the single-path manner is as follows: The remote UE communicates with a network device via the relay UE through an indirect path. It can be learned from FIG. 2 that the dual-path manner is as follows: There are two paths between the remote UE and a network device, where one is an indirect path that passes through the relay UE, and the other is a direct path between the remote UE and the network device.

One relay UE may provide a relay service for one remote UE, or may provide a relay service for a plurality of remote UEs. This is not limited. One remote UE may access the network through a one-hop path (that is, via one relay UE), or may access the network through a multi-hop path (that is, via a plurality of relay UEs). This is not limited.

In the sidelink U2N relay scenario, the relay UE is connected to the remote UE through a PC5 interface, the relay UE is connected to the network device through a Uu interface, and the remote UE may establish a connection to the network device via the relay UE, to perform data transmission. Refer to FIG. 3. The following uses layer 2 relay (L2 sidelink relay) as an example to describe a user plane protocol stack and a control plane protocol stack used during data transmission.

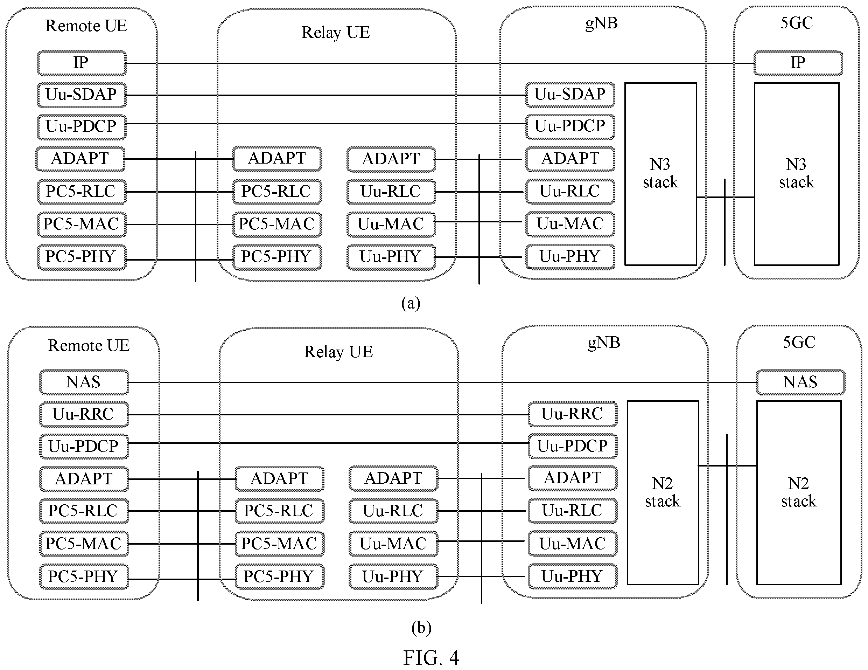

(a) and (b) in FIG. 4 are a diagram of a protocol stack for sidelink U2N relay.

(a) in FIG. 4 is a diagram of a user plane protocol stack for sidelink U2N relay (that is, a user plane protocol stack used when the remote UE establishes the connection to the network device via the relay UE for data transmission). (b) in FIG. 4 is a diagram of a control plane protocol stack for sidelink U2N relay (that is, a control plane protocol stack used when the remote UE establishes the connection to the network device via the relay UE for data transmission).

As shown in (a) in FIG. 4, the user plane protocol stack for sidelink U2N relay may include a physical (physical, PHY) layer (for example, PC5-PHY and Uu-PHY shown in (a) in FIG. 4), a media access control (media access control, MAC) layer (for example, PC5-MAC and Uu-MAC shown in (a) in FIG. 4), a radio link control (radio link control, RLC) layer (for example, PC5-RLC and Uu-RLC shown in (a) in FIG. 4), an adaptation (adapt) layer (the adaptation layer may also be referred to as a sidelink relay adaptation protocol (sidelink relay adaptation protocol, SRAP) layer), a packet data convergence protocol (packet data convergence protocol, PDCP) layer (for example, Uu-PDCP shown in (a) in FIG. 4), a service data adaptation protocol (Service Data Adaptation Protocol, SDAP) layer (for example, Uu-SDAP shown in (a) in FIG. 4), and an internet protocol (Internet Protocol, IP) layer.

As shown in (b) in FIG. 4, the control plane protocol stack for sidelink U2N relay may include a PHY layer (for example, PC5-PHY and Uu-PHY shown in (b) in FIG. 4), a MAC layer (for example, PC5-MAC and Uu-MAC shown in (b) in FIG. 4), an RLC layer (for example, PC5-RLC and Uu-RLC shown in (b) in FIG. 4), an adapt layer, a PDCP layer (for example, Uu-PDCP shown in (b) in FIG. 4), a radio resource control (radio resource control, RRC) layer (for example, Uu-RRC shown in (a) in FIG. 4), and a non-access stadium (non-access stadium, NAS).

The adaptation layer between the remote UE and the relay UE may support mapping of a plurality of Uu-PDCP entities of the remote UE to one SL-RLC entity, that is, support N:1 mapping between a Uu data radio bearer (data radio bearer, DRB) of the remote UE and an SL DRB, where N is an integer greater than or equal to 1. The DRB may also be understood as an RLC bearer or an RLC channel (RLC channel).

The adaptation layer existing between the relay UE and the network device may support a plurality of remote UEs in accessing the network via the same relay UE. The adaptation layer may include identification information of the remote UE, to distinguish between remote UEs. The identification information of the remote UE may be allocated by the relay UE, or may be allocated by the network device. This is not limited. In addition, if a plurality of DRBs of one remote UE are mapped to one DRB of the relay UE, the adaptation layer may further carry DRB identifiers of the remote UE.

4. Quality of service (quality of service, QoS) flow (QoS flow): It is a QoS differentiation granularity in a protocol data unit (protocol data unit, PDU) session or a sidelink. One QoS flow identifier (QoS flow identifier, QFI) may be used to identify one QoS flow. One PDU session or one sidelink may include a plurality of QoS flows, and QFIs of the QoS flows are different. In other words, one QFI may be unique in one PDU session.

Further, a QoS flow corresponding to a service may be a QoS flow used to transmit data of the service. For example, when the data of the service is transmitted by using a QoS flow in a PDU session or a sidelink, the QoS flow may be referred to as a QoS flow corresponding to the service. A service carried by a QoS flow may be a service transmitted by using the QoS flow.

5. DRB: One or more radio bearers are introduced in a wireless network, to meet service quality requirements of different types of services of a terminal device. The radio bearers include a DRB and a signaling radio bearer (signaling radio bearer, SRB), and are used to transmit different types of service data (including control plane signaling and user plane data) between the terminal and a network device.

Further, a DRB corresponding to a service may be a DRB used to transmit data of the service. For example, when the data of the service is transmitted by using a DRB, the DRB may be referred to as a DRB corresponding to the service.

6. Buffer status report (buffer status report, BSR): A UE may insert a BSR control unit into a PDU at a MAC layer to report, to a network device, how much data currently needs to be sent in one or more logical channel groups, and request a radio resource (for example, a time-frequency resource) to be allocated. The BSR control unit is sent, so that the network device may know an amount of data that needs to be sent by the UE, and the network device may allocate a proper radio resource (for example, a time-frequency resource).

7. Logical channel prioritization (logical channel prioritization, LCP) process: For one UE, there may be a plurality of services or a plurality of logical channels that need transmission. At a MAC layer, the UE may multiplex and transmit data on the plurality of logical channels based on an uplink resource allocated by a network device. A process of multiplexing and transmitting the data on the plurality of logical channels may be referred to as an LCP process.

8. Sidelink control information (sidelink control information, SCI): It may also be referred to as side link control information, and can indicate a resource location for transmitting data on a sidelink.

9. Time unit: It may be one or more radio frames, one or more subframes, one or more slots, one or more mini-slots, one or more symbols, or the like. The symbol may be an orthogonal frequency division multiplexing (orthogonal frequency division multiplexing, OFDM) symbol, a discrete fourier transform spread spectrum orthogonal frequency division multiplexing (discrete fourier transform spread spectrum orthogonal frequency division multiplexing, DFT-S-OFDM) symbol, or the like. Alternatively, the time unit may be one second (second, s), multiple seconds, one millisecond (millisecond, ms), multiple milliseconds, or the like.

10. SL resource: It is a resource used to transmit data on a sidelink. In an example, a UE obtains the sidelink resource in two manners, where one manner is referred to as a mode (Mode) 1, and may be understood as that a network device schedules and allocates the resource; and the other manner is referred to as a mode 2, and may be understood as that the UE selects the resource. The following briefly describes the two manners.

Mode 1: The network device may perform scheduling by using downlink control information (downlink control information, DCI), or the network device configures a configured grant (configured grant, CG) resource through RRC. The CG resource includes two types (type): (1) A CG type 1: The network device configures a semi-static periodic transmission resource for the UE, and indicates the configured transmission resource to the UE through RRC. (2) A CG type 2: The network device configures a semi-static periodic transmission resource for the UE, indicates the configured transmission resource to the UE through RRC, and indicates, by using DCI, the UE to activate or deactivate the configured resource.

For example, if the UE reports a current SL buffer status to the network device by using a BSR, the network device may schedule the resource by using the DCI after receiving the SL buffer status reported by the UE. If the UE reports, to the network device by using an RRC message, information about a periodic service model that is being performed on a PC5 interface (for example, including a service periodicity, a service information size, and a sidelink QoS flow identifier corresponding to a service), after receiving the information, the network device may configure the CG resource through RRC.

Mode 2: One or more resource pools are configured for the UE. The UE may determine available resources and unavailable resources in the resource pool based on a rule, and then select, from the available resources, a resource suitable for a current data transmission requirement to send data.

In the sidelink U2N relay scenario, a process in which the remote UE sends data (for example, referred to as uplink data) to the network device via the relay UE may include the following steps.

Step 1: The remote UE sends the uplink data to the relay UE that provides a relay service for the remote UE.

For example, if there is no Uu interface between the remote UE and the network device, that is, a manner in which the remote UE accesses the network is the single-path manner shown in FIG. 1, the remote UE may obtain an SL resource in the mode 2, and send the uplink data to the relay UE.

Step 2: After receiving the data of the remote UE, the relay UE buffers the data, and triggers a BSR.

After receiving, from the PC5 interface, the uplink data sent by the remote UE, the relay UE processes the uplink data by using a protocol stack, and places the uplink data in a Uu buffer of the relay UE. The protocol stacks shown in (a) and (b) in FIG. 4 are used as an example. The relay UE receives the uplink data of the remote UE via an SL module. After being processed, the uplink data enters a Uu module, and the BSR on the Uu interface is triggered. In other words, the relay sends the BSR to the network device.

The relay UE cannot send the BSR without an uplink resource. Therefore, the UE needs to request the resource from the network device by sending an uplink scheduling request (scheduling request, SR). The BSR is encapsulated in a MAC PDU and is sent to a network side through a PUSCH channel, and therefore needs the uplink resource. An SR signal may be transmitted in a PUCCH control channel, and therefore may be sent to the network side without the uplink resource.

Step 3: The relay UE receives DCI scheduling of the network device, and transmits the data by using the scheduled uplink resource.

When the relay UE has service data of the relay UE, or the relay UE serves a plurality of remote UEs, when receiving the uplink resource scheduled by the network device, the relay UE first performs a logical channel prioritization (logical channel prioritization, LCP) process. Because a basic rule of LCP is to preferentially transmit high-priority data, the relay UE may transmit the uplink data of the relay UE by using the uplink resource (for example, the uplink data of the relay UE has a higher priority), or may transmit uplink data of another remote UE by using the uplink resource (for example, the data of the another remote UE has a higher priority).

It can be learned from the foregoing processing procedure that in the sidelink U2N relay scenario, although the relay UE may request the uplink resource after being triggered by the remote UE, due to occurrence of other high-priority data (for example, the uplink data of the relay UE, or for another example, the uplink data of the another remote UE), the uplink resource scheduled by the network device is not used to send the uplink data of the remote UE. Therefore, two-hop transmission of a sidelink U2N relay system (that is, the remote UE sends the uplink data to the relay UE, and then the relay UE sends the uplink data to the network device) and a resource preemption problem that may occur on a relay UE side cause a significant increase in an overall uplink transmission delay of the remote UE, affecting user experience of the remote UE.

In view of this, this application provides a solution, in which a network side jointly configures resources required by a remote UE to send uplink data, so that a transmission delay of the uplink data of the remote UE is reduced, to reduce the transmission delay of the uplink data of the remote UE as much as possible.

It may be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing briefly describes the terms related in this application, and details are not described in the following embodiments. With reference to the accompanying drawings, the following describes in detail a method provided in embodiments of this application. Embodiments provided in this application may be applied to the network architecture shown in FIG. 1 or FIG. 2. This is not limited.

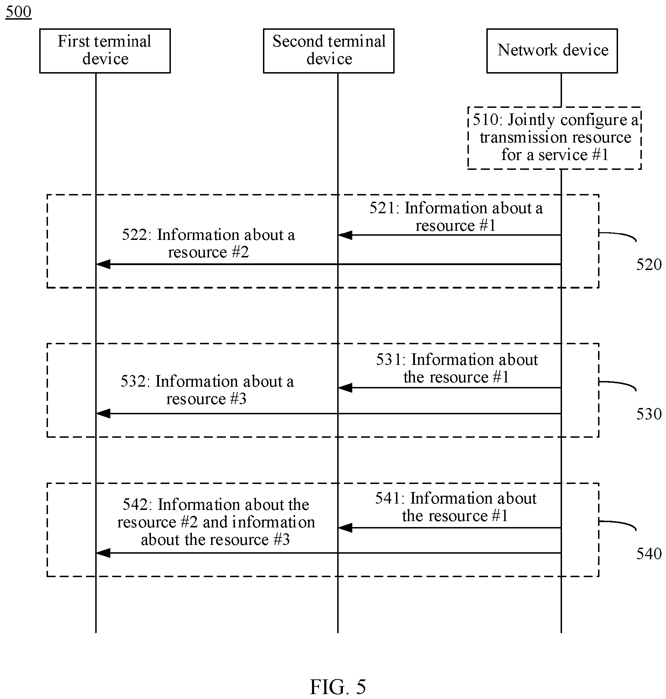

FIG. 5 is a diagram of a data transmission method 500 according to an embodiment of this application. The method 500 may include the following steps.

In a first possible case, the method 500 includes step 520.

520: A network device sends information about a resource #1 (an example of a second resource) and information about a resource #2 (an example of a first resource).

As shown in FIG. 5, the network device sends the information about the resource #1 to a second terminal device, and the network device sends the information about the resource #2 to a first terminal device. This is a brief description, and details are described later.

The resource #1 represents a resource used to transmit data of a service #1 (an example of a first service) between the second terminal device and the network device. The second terminal device may send the data of the service #1 to the network device by using the resource #1. Correspondingly, the network device may receive the data of the service #1 from the second terminal device by using the resource #1. In an example, the resource #1 may be, for example, a CG resource (for example, the resource #1 is an UL CG resource), that is, the resource #1 is a periodic transmission resource. In this example, the network device may configure the CG resource for the service #1, where the CG resource is used to transmit the data of the service #1 between the second terminal device and the network device.

The resource #2 represents a resource used to transmit data of the service #1 between the second terminal device and the first terminal device. The first terminal device may send the data of the service #1 to the second terminal device by using the resource #2. Correspondingly, the second terminal device may receive the data of the service #1 from the first terminal device by using the resource #1. Then, the second terminal device may send the data of the service #1 to the network device. In an example, the resource #2 may be, for example, a CG resource (for example, the resource #2 is an SL CG resource), that is, the resource #2 is a periodic transmission resource. In this example, the network device may configure the CG resource for the service #1, where the CG resource is used to transmit the data of the service #1 between the second terminal device and the first terminal device.

The service #1 is a service of the first terminal device. The service #1 may represent one service, or may represent a plurality of services. This is not limited. In this embodiment of this application, the first terminal device may be a remote UE, and the second terminal device may be a relay UE. Details are not described below again.

Optionally, before step 520, the method 500 further includes: The network device configures the resource #1 and the resource #2 for the service #1. Specifically, descriptions are provided below with reference to step 510.

In a second possible case, the method 500 includes step 530.

530: A network device sends information about a resource #1 and information about a resource #3 (an example of a third resource).

As shown in FIG. 5, the network device sends the information about the resource #1 to a second terminal device, and the network device sends the information about the resource #3 to a first terminal device. This is a brief description, and details are described later.

The resource #3 represents a resource used to transmit data of a service #1 between the first terminal device and the network device. The first terminal device may send the data of the service #1 to the network device by using the resource #3. Correspondingly, the network device receives the data of the service #1 from the first terminal device by using the resource #3. In an example, the resource #3 may be, for example, a CG resource (for example, the resource #3 is an UL CG resource), that is, the resource #3 is a periodic transmission resource. In this example, the network device may configure the CG resource for the service #1, where the CG resource is used to transmit the data of the service #1 between the first terminal device and the network device.

Optionally, before step 520, the method 500 further includes: The network device configures the resource #1 and the resource #3 for the service #1. Specifically, descriptions are provided below with reference to step 510.

In a third possible case, the method 500 includes step 540.

540: A network device sends information about a resource #1, information about a resource #2, and information about a resource #3.

As shown in FIG. 5, the network device sends the information about the resource #1 to a second terminal device, and the network device sends the information about the resource #2 and the information about the resource #3 to a first terminal device. This is a brief description, and details are described later.

Optionally, before step 520, the method 500 further includes: The network device configures the resource #1, the resource #2, and the resource #3 for a service #1. Specifically, descriptions are provided below with reference to step 510.

Optionally, the method 500 further includes step 510.

510: The network device jointly configures a transmission resource for the service #1.

To be specific, before the network device sends information about a resource (for example, the information about the resource #1, for another example, the information about the resource #2, or for another example, the information about the resource #3), the network device may further configure the resource. That the network device jointly configures the transmission resource for the service #1 may include any one of the following solutions.

Solution 1: The network device configures the resource #1 and the resource #2 for the service #1.

Based on the solution 1, for data to be sent by the first terminal device to the network device via the second terminal device, the network device may jointly configure a transmission resource for the data, that is, the network device configures resources used from sending the data by the first terminal device to receiving the data by the network device. Specifically, the network device configures a resource used by the first terminal device to send the data to the second terminal device, and the network device configures a resource used by the second terminal device to forward the data to the network device. In this way, when the data needs to be transmitted, the resource #1 and the resource #2 that are jointly configured may be directly used for transmission.

Solution 2: The network device configures the resource #1 and the resource #3 for the service #1.

In a scenario in which the first terminal device sends data to the network device via the second terminal device and directly, when receiving the data to be sent by the first terminal device to the network device, the second terminal device may also first request an uplink resource from the network device. After the second terminal device receives the uplink resource scheduled by the network device, the uplink resource may be preferentially used to transmit other high-priority data. As a result, the uplink resource scheduled by the network device is not used to send uplink data of the first terminal device. Based on the solution 2, for the data to be sent by the first terminal device to the network device via the second terminal device and directly, the network device may jointly configure a transmission resource for the data. Specifically, the network device configures a resource used by the first terminal device to send the data to the second terminal device, and the network device configures a resource used by the first terminal device to directly send the data to the network device. In this way, when the data needs to be transmitted, the resource #1 and the resource #3 that are jointly configured may be directly used for transmission.

Solution 3: The network device configures the resource #1, the resource #2, and the resource #3 for the service #1.

Based on the solution 3, for data to be sent by the first terminal device to the network device via the second terminal device and directly, the network device may jointly configure a transmission resource for the data, that is, the network device configures resources used from sending the data by the first terminal device to receiving the data by the network device. Specifically, the network device configures a resource used by the first terminal device to send the data to the second terminal device, the network device configures a resource used by the second terminal device to forward the data to the network device, and the network device further configures a resource used by the first terminal device to directly send the data to the network device. In this way, when the data needs to be transmitted, the resource #1, the resource #2, and the resource #3 that are jointly configured may be directly used for transmission.

It may be understood that the foregoing three solutions are simple examples for description, and are described in detail below with reference to a method 600, a method 800, and a method 1300.

It may be further understood that variations of the foregoing three solutions are all applicable to this embodiment of this application. For example, the network device may alternatively configure the resource #2 and the resource #3 for the service #1.

After jointly configuring the transmission resource for the service #1, the network device may separately send corresponding resources to the first terminal device and the second terminal device. The following provides descriptions with reference to three possible cases.

In a first possible case, if the network device configures the resource #1 and the resource #2 for the service #1, the method 500 further includes step 520. Step 520 includes 521 and 522.

521: The network device sends the information about the resource #1 to the second terminal device.

The information about the resource #1 indicates that the resource #1 is used to transmit the service #1. In other words, it can be learned, based on the information about the resource #1, that the resource #1 is used to transmit the service #1. In a possible implementation, the information about the resource #1 includes information #1, and the information #1 indicates that the resource #1 is used to transmit the service #1. In other words, it can be learned, based on the information #1, that the resource #1 is used to transmit the service #1. Optionally, the information about the resource #1 further includes configuration information of the resource #1. The configuration information of the resource #1 indicates the resource #1. It may be understood that the configuration information of the resource #1 and the information #1 may be carried in a same piece of signaling, or may be carried in different signaling. This is not limited. In addition, the configuration information of the resource #1 may be carried in a same piece of signaling, or may be carried in different signaling (for example, one part of the configuration information is carried in one piece of signaling, and the other part of the configuration information is carried in another piece of signaling). The information #1 and the configuration information of the resource #1 is described in detail below with reference to the method 600.

The network device sends the information about the resource #1 to the second terminal device. Therefore, after receiving the uplink data to be sent by the first terminal device to the network device, the second terminal device may directly forward the uplink data by using the resource #1.

In an example, the information about the resource #1 is carried in an RRC message. Alternatively, some of the information about the resource #1 is carried in DCI, and some is carried in an RRC message. Specific signaling for carrying the information about the resource #1 is not limited in this embodiment of this application.

522: The network device sends the information about the resource #2 to the first terminal device.

The information about the resource #2 indicates that the resource #2 is used to transmit the service #1. In other words, it can be learned, based on the information about the resource #2, that the resource #2 is used to transmit the service #1. In a possible implementation, the information about the resource #2 includes information #2, and the information #2 indicates that the resource #2 is used to transmit the service #1. In other words, it can be learned, based on the information #2, that the resource #2 is used to transmit the service #1. Optionally, the information about the resource #2 further includes configuration information of the resource #2. The configuration information of the resource #2 indicates the resource #2. It may be understood that the configuration information of the resource #2 and the information #2 may be carried in a same piece of signaling, or may be carried in different signaling. This is not limited. In addition, the configuration information of the resource #2 may be carried in a same piece of signaling, or may be carried in different signaling (for example, one part of the configuration information is carried in one piece of signaling, and the other part of the configuration information is carried in another piece of signaling). The information #2 and the configuration information of the resource #2 is described in detail below with reference to the method 600.

The network device sends the information about the resource #2 to the first terminal device. Therefore, when sending the uplink data to the network device via the second terminal device, the first terminal device may directly send the uplink data to the second terminal device by using the resource #2.

In an example, the information about the resource #2 is carried in an RRC message. Alternatively, some of the information about the resource #2 is carried in DCI, and some is carried in an RRC message. Specific signaling for carrying the information about the resource #2 is not limited in this embodiment of this application.

Based on the foregoing first possible case, when sending the uplink data to the network device via the second terminal device, the first terminal device may send the uplink data to the second terminal device by using the resource #2. After receiving the uplink data, the second terminal device may directly forward the uplink data to the network device by using the resource #1.

In a second possible case, if the network device configures the resource #1 and the resource #3 for the service #1, the method 500 further includes step 530. Step 530 includes steps 531 and 532.

531: The network device sends the information about the resource #1 to the second terminal device. Step 531 is similar to step 521, and details are not described herein again.

532: The network device sends the information about the resource #3 to the first terminal device.

The information about the resource #3 indicates that the resource #3 is used to transmit the service #1 of the first terminal device. In other words, it can be learned, based on the information about the resource #3, that the resource #3 is used to transmit the service #1. In a possible implementation, the information about the resource #3 includes information #3, and the information #3 indicates that the resource #3 is used to transmit the service #1. In other words, it can be learned, based on the information #3, that the resource #3 is used to transmit the service #1. Optionally, the information about the resource #3 further includes configuration information of the resource #3. The configuration information of the resource #3 indicates the resource #3. It may be understood that the configuration information of the resource #3 and the information #3 may be carried in a same piece of signaling, or may be carried in different signaling. This is not limited. In addition, the configuration information of the resource #3 may be carried in a same piece of signaling, or may be carried in different signaling (for example, one part of the configuration information is carried in one piece of signaling, and the other part of the configuration information is carried in another piece of signaling). The information #3 and the configuration information of the resource #3 is described in detail below with reference to the method 800.

The network device sends the information about the resource #3 to the first terminal device. Therefore, when directly sending the uplink data to the network device, the first terminal device may directly send the uplink data to the network device by using the resource #3.

In an example, the information about the resource #3 is carried in an RRC message. Alternatively, some of the information about the resource #3 is carried in DCI, and some is carried in an RRC message. Specific signaling for carrying the information about the resource #3 is not limited in this embodiment of this application.

Based on the foregoing second possible case, when sending the uplink data to the network device via the second terminal device and directly, the first terminal device may directly send uplink data to the network device by using the resource #3, and send uplink data to the second terminal device. After receiving the uplink data, the second terminal device may directly forward the uplink data to the network device by using the resource #1. It may be understood that the uplink data directly sent by the first terminal device to the network device may be the same as or different from the uplink data sent by the first terminal device to the network device via the second terminal device. This is not limited. For example, the first terminal device directly sends some of the uplink data to the network device, and the first terminal device sends remaining uplink data to the network device via the second terminal device. For another example, the first terminal device directly sends the uplink data to the network device, and the first terminal device repeatedly sends the uplink data to the network device via the second terminal device.

In a third possible case, if the network device configures the resource #1, the resource #2, and the resource #3 for the service #1, the method 500 further includes step 540. Step 540 includes steps 541 and 542.

541: The network device sends the information about the resource #1 to the second terminal device. Step 541 is similar to step 521, and details are not described herein again.

542: The network device sends the information about the resource #2 and the information about the resource #3 to the first terminal device.

In an example, the information about the resource #2 and the information about the resource #3 may be carried in a same piece of signaling, or may be carried in different signaling. This is not limited.

Based on the foregoing third possible case, when sending the uplink data to the network device via the second terminal device and directly, the first terminal device may directly send uplink data to the network device by using the resource #3, and directly send uplink data to the second terminal device by using the resource #2. After receiving the uplink data, the second terminal device may directly forward the uplink data to the network device by using the resource #1. It may be understood that the uplink data directly sent by the first terminal device to the network device may be the same as or different from the uplink data sent by the first terminal device to the network device via the second terminal device. This is not limited. For details, refer to the descriptions in the second possible case.

The foregoing provides descriptions with reference to the three cases as examples. Based on this embodiment of this application, when sending the data of the service #1 to the network device, the first terminal device may directly transmit the data of the service #1 by using the jointly configured resource, to reduce a transmission delay of the uplink data of the first terminal device to reduce the transmission delay of the uplink data of the first terminal device as much as possible.

Optionally, the service #1 is a periodically transmitted service. In this embodiment of this application, the network device first determines whether the service #1 is the periodically transmitted service. When the service #1 is the periodically transmitted service, the network device jointly configures the transmission resource for the service #1. In this way, resource utilization can be improved.

Optionally, the network device determines, based on a service feature of the service #1, to jointly configure the transmission resource for the service #1.

The service feature of the service #1 represents information that can reflect a feature of the service #1, or information related to the service #1. In an example, the service feature of the service #1 includes at least one piece of the following information: a data periodicity (periodicity) of a QoS flow corresponding to the service #1, a data arrival time (burst arrival time) of the service #1, a maximum data burst volume (maximum data burst volume) of the service #1, and the like.

**In** a possible case, if the network device learns, based on the service feature of the service #1, that the service #1 is the periodically transmitted service, the network device jointly configures the transmission resource for the service #1. In this case, the network device may first determine whether the service #1 is the periodically transmitted service. When the service #1 is the periodically transmitted service, the network device jointly configures the transmission resource for the service #1, to improve resource utilization. For example, if the data periodicity of the QoS flow corresponding to the service #1 is X time units (X is an integer greater than or equal to 1), the network device may determine, based on the data periodicity of the QoS flow corresponding to the service #1, that the service #1 is the periodically transmitted service, and further jointly configure the transmission resource for the service #1. For another example, if the data arrival time of the service #1 includes a plurality of arrival times, and time gaps between adjacent arrival times are the same, the network device may determine that the service #1 is the periodically transmitted service, and further jointly configure the transmission resource for the service #1.

In another possible case, if the network device learns, based on the service feature of the service #1, that the service #1 is an emergency service (or a delay-sensitive service), the network device jointly configures the transmission resource for the service #1. In this case, the network device may first determine whether the service #1 is the emergency service. When the service #1 is the emergency service, the network device jointly configures the transmission resource for the service #1, to meet a service requirement as much as possible.

It may be understood that the foregoing is an example for description, and this embodiment of this application is not limited thereto.

It may be further understood that the service #1 is not limited. For example, the service #1 may be an ultra-reliable and low latency communication (ultra-reliable and low latency communication, URLLC) service. Alternatively, the service #1 may be a time-sensitive networking (time-sensitive networking, TSN) service. Alternatively, the service #1 may be an industrial service. Alternatively, the service #1 may be a video service. This is not limited. The services listed above may be periodically transmitted services.

Optionally, the network device may obtain the service feature of the service #1 in any one of the following manners.

In a first possible implementation, the network device receives the service feature of the service #1 from a core network device (for example, an AMF).

Based on this implementation, the core network device may provide the service feature of the service #1 for the network device. The network device may determine, based on the service feature that is of the service #1 and that is received from the core network device, whether to jointly configure the transmission resource for the service #1. For example, if the network device determines, based on the service feature that is of the service #1 and that is received from the core network device, that the service #1 is the periodically transmitted service, the network device jointly configures the transmission resource for the service #1. For another example, the service feature that is of the service #1 and that is received by the network device from the core network device indicates that the service #1 is the periodically transmitted service, that is, the network device may directly learn from a core network that the service #1 is the periodically transmitted service, and in this case, the network device jointly configures the transmission resource for the service #1.

In a second possible implementation, the network device determines the service feature of the service #1.

Based on this implementation, the network device may determine the service feature of the service #1, so that the network device determines whether to jointly configure the transmission resource for the service #1. For example, the network device may determine historical traffic information of the first terminal device, and determine a future service feature of the first terminal device with reference to some prediction methods.

In a third possible implementation, the network device receives the service feature of the service #1 from the first terminal device.

For example, the first terminal device reports the service feature of the service #1 to the network device by using an RRC message, for example, reports at least one piece of the following information: a periodicity of the service #1, the data arrival time of the service #1, and the maximum data burst volume of the service #1. In this way, the network device may determine, based on the service feature that is of the service #1 and that is received from the first terminal device, whether to jointly configure the transmission resource for the service #1.

Based on any one of the foregoing implementations, the network device may obtain the service feature of the service #1, for example, receive the service feature of the service #1 from the core network device in the first implementation, determine the service feature of the service #1 in the second implementation, or receive the service feature of the service #1 from the first terminal device in the third implementation. Therefore, the network device may determine, based on the service feature of the service #1, to jointly configure the transmission resource for the service #1.

Optionally, the transmission resource jointly configured by the network device for the service #1 is a CG resource. For example, the resource #1 is an UL CG resource, the resource #2 is an SL CG resource, and the resource #3 is an UL CG resource. In this way, signaling overheads and a delay that are caused by requesting a resource each time the data of the service #1 is transmitted can be reduced. For example, the network device determines the service feature of the service #1, for example, determines at least one piece of the following information: the periodicity of the service #1, the data arrival time of the service #1, and the maximum data burst volume of the service #1. The network device configures the CG resources for the service #1 based on the at least one piece of the foregoing information.

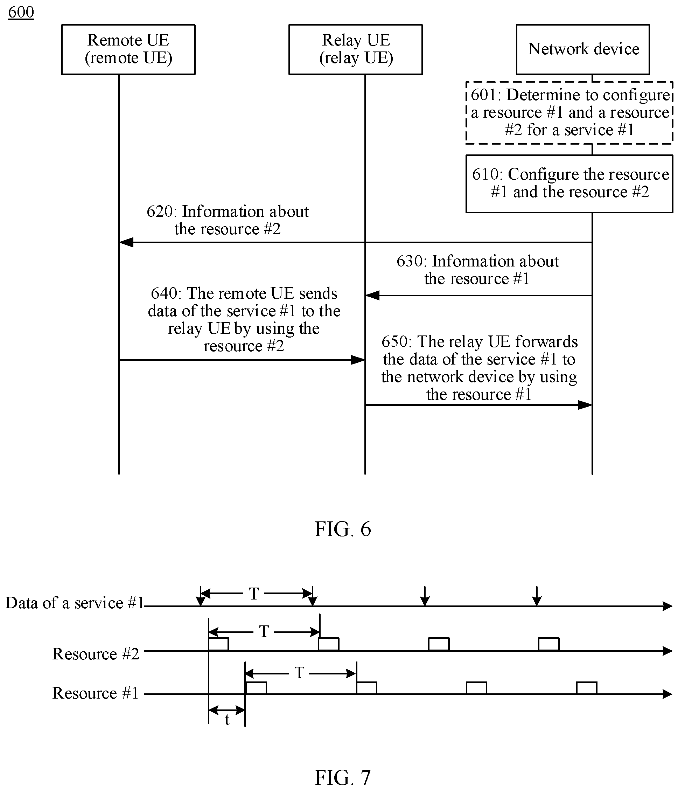

For ease of understanding, the following describes, with reference to FIG. 6 to FIG. 14, the solution 1 to the solution 3 in the method 500 by using an example in which the first terminal device is a remote UE and the second terminal device is a relay UE. For details about related steps and terms, refer to the foregoing descriptions.

FIG. 6 is a diagram of the data transmission method 600 according to an embodiment of this application. The method 600 may be applicable to the foregoing solution 1, that is, a network device jointly configures a resource #1 and a resource #2. The method 600 may include the following steps.

610: The network device configures the resource #1 and the resource #2.

The resource #1 is a resource (or referred to as an uplink resource) used to transmit data of a service #1 between a relay UE and the network device. The relay UE may send the data of the service #1 to the network device by using the resource #1. Correspondingly, the network device may receive the data of the service #1 from the relay UE by using the resource #1.

Optionally, the resource #1 is an UL CG resource. That the network device configures the resource #1 may be replaced with that the network device performs UL CG configuration. In a possible implementation, for UL CG configuration, refer to a definition in a 3GPP protocol TS 38.331. Details are not described herein again. In an example, configuring the resource #1 includes configuring at least one piece of the following configuration information corresponding to the resource #1: a frequency hopping manner (for example, intra-slot or inter-slot), a demodulation reference signal (demodulation reference signal, DMRS) configuration, a modulation and coding scheme (modulation and coding scheme, MCS) table, a resource block group (resource block group, RBG) size, a quantity of hybrid automatic repeat request (hybrid automatic repeat request, HARQ) processes, a quantity of repetitions, a redundancy version used during repeated sending, a resource allocation type, a time domain offset, a time domain resource, a frequency domain resource, an antenna port, precoding, a quantity of layers, and a sounding reference signal (sounding reference signal, SRS) resource indicator.

The resource #2 is a resource (or referred to as an SL resource) used to transmit data of the service #1 between a remote UE and the relay UE. The remote UE may send the data of the service #1 to the relay UE by using the resource #2. Correspondingly, the relay UE may receive the data of the service #1 from the remote UE by using the resource #1. Then, the relay UE may send the data of the service #1 to the network device.

Optionally, the resource #2 is an SL CG resource. That the network device configures the resource #2 may be replaced with that the network device performs SL CG configuration. In a possible implementation, for SL CG configuration, refer to a definition in the 3GPP protocol TS 38.331. Details are not described herein again. In an example, configuring the resource #2 includes configuring at least one piece of the following configuration information corresponding to the resource #2: a CG identifier (CG ID), a periodicity, a quantity of SL HARQ processes, a maximum quantity of transmission times corresponding to logical channel prioritization, a time domain resource position, a subchannel index corresponding to a CG resource start location, and a frequency domain resource position.

The resource #2 is used as an example. If configuring the resource #2 includes configuring some of the foregoing configuration information corresponding to the resource #2, the other configuration information may be predefined, for example, predefined in a standard, or may be determined based on the configured configuration information. For example, configuring the resource #2 includes configuring the time domain resource position and the frequency domain resource position that correspond to the resource #2. In this case, the periodicity corresponding to the resource #2 may be a periodicity predefined in the standard, or may be a periodicity corresponding to the time domain resource position and the frequency domain resource position (for example, different time domain resource positions and frequency domain resource positions correspond to different periodicities. Therefore, the periodicity corresponding to the resource #2 may be determined based on the time domain resource position and the frequency domain resource position that correspond to the resource #2). The resource #1 and the resource #3 are similar, and details are not described again.

As described above, the resource #1 and the resource #2 may be periodic transmission resources. Optionally, a periodicity (referred to as T1 for differentiation) of the resource #1 and the periodicity (referred to as T2 for differentiation) of the resource #2 satisfy any one of the following forms.

Form 1: The periodicity of the resource #1 is the same as the periodicity of the resource #2.

Based on this form, T1=T2.

In a possible case, T1=T2=*f₁*(T), where T represents a periodicity of the service #1, and *f₁*() represents a function. For example, T1=T2=T. For another example, T1=T2=n*T, where n is an integer greater than 1. For example, n=2. For example, if a delay tolerance of the service #1 is high, for example, a packet delay budget (packet delay budget, PDB) is greater than the periodicity of the service #1, T1 and T2 may be greater than T, for example, are n*T.

FIG. 7 is a diagram of an association relationship between the resource #1 and the resource #2 in time domain.

As shown in FIG. 7, optionally, the data of the service #1 is periodically transmitted. To be specific, the remote UE periodically sends the data of the service #1 to the network device, and the periodicity is T. The periodicity of the resource #1 in time domain is T, and the periodicity of the resource #2 in time domain is also T.

Form 2: The periodicity of the resource #1 is different from the periodicity of the resource #2.

Based on this form, T1≠T2.

In a possible case, T1=*f₂*(T2), where *f₂*() represents a function. For example, T1=m*T2, where m is a number greater than 0. For example, m=2. For another example, m=1/2.

In another possible case, T1=*f₃*(T), and T2=*f₄*(T), where T represents a periodicity of the service #1, and *f₃*() and *f₄*() represent different functions. For example, T1=T, and T2=2T. For another example, T1=2T, and T2=T.

Optionally, a time domain start position of the resource #1 is after a time domain start position of the resource #2. In this way, after receiving the data of the service #1 from the remote UE, the relay UE may have time to process the data by using a corresponding protocol stack. FIG. 4 is used as an example. On a relay UE side, data needs to be sequentially processed by PC5-PHY, a PC5-MAC layer, a PC5-ADAPT layer, a Uu-ADAPT layer, a Uu-RLC layer, a Uu-MAC layer, and Uu-PHY. The time domain start position of the resource #1 is designed to be after the time domain start position of the resource #2, so that there can be sufficient time on the relay UE side to process the data of the service #1.

In a possible case, a time gap between the time domain start position of the resource #1 and the time domain start position of the resource #2 is t time units, and t is an integer greater than or equal to 1. The time unit may be a millisecond, a slot (slot), or another unit. This is not limited. A size of the slot is a size of a slot of a current PC5 interface or Uu interface. FIG. 7 is used as an example. As shown in FIG. 7, an interval between the resource #1 and the resource #2 in time domain is t. In other words, an interval between a periodicity boundary of the resource #1 and a periodicity boundary of the resource #2 is t.

It may be understood that the foregoing is an example for description, and this embodiment of this application is not limited thereto. For example, the time domain start position of the resource #1 may alternatively be the same as the time domain start position of the resource #2. For another example, a time domain position of the resource #1 may partially overlap a time domain position of the resource #2.

620: The network device sends information about the resource #2 to the remote UE. Correspondingly, the remote UE receives the information about the resource #2.

The information about the resource #2 may include configuration information of the resource #2 and information #2.

In a possible implementation, the information about the resource #2 may be carried in an RRC reconfiguration message and/or DCI.

For example, the network device sends the RRC reconfiguration message to the remote UE, where the RRC reconfiguration message includes the information about the resource #2.

For another example, the information about the resource #2 includes the configuration information of the resource #2, and the configuration information of the resource #2 includes at least one piece of the following information: the time domain resource position, the subchannel index corresponding to the CG resource start location, and the frequency domain resource position. The network device sends the DCI to the remote UE, where the DCI includes the configuration information of the resource #2.

For another example, the network device sends the RRC reconfiguration message and the DCI to the remote UE, where the RRC reconfiguration message includes some configuration information (for example, the CG ID, the periodicity, the quantity of SL HARQ processes, and the maximum quantity of transmission times corresponding to the logical channel prioritization) of the resource #2, and the DCI includes remaining configuration information (for example, the time domain resource position, the subchannel index corresponding to the CG resource start location, and the frequency domain resource position) of the resource #2.

The information #2 indicates that the resource #2 is used to transmit the data of the service #1. In a possible form, the information #2 indicates that a logical channel #2 (an example of a first logical channel) uses the resource #2, or the information #2 indicates that a logical channel #2 is allowed to use the resource #2. The logical channel #2 is a corresponding logical channel for transmitting the data of the service #1 between the remote UE and the relay UE. In this embodiment of this application, "indication" is mentioned for a plurality of times. It may be understood that "indication" may include direct indication and indirect indication. When a piece of information is described to indicate A, the information may directly indicate A or indirectly indicate A, but it does not indicate that the information definitely carries A. For example, that the information #2 indicates that the resource #2 is used to transmit the data of the service #1 may be that the information #2 includes a resource allowed to be used to transmit the data of the service #1, where the resource includes the resource #2; may be that the information #2 includes a service that is allowed to be transmitted by using the resource #2, where the service includes the service #1; may be that the information #2 includes a logical channel allowed to use the resource #2, where the logical channel includes the logical channel #2; or may be that the information #2 includes a resource that is allowed to be used by the logical channel #2, where the resource includes the resource #2. Information #1 and information #3 are similar, and details are not described below again.

Optionally, there is a correspondence (an example of a first correspondence, denoted as a correspondence #2 for differentiation) between the service #1 and the resource #2. Therefore, based on the correspondence between the service #1 and the resource #2, the resource #2 may be used to transmit the service #1. Further, optionally, the network device further sends the correspondence #2 to the remote UE. The correspondence #2 and the information about the resource #2 may be transmitted by using a same piece of signaling (for example, carried in a same RRC reconfiguration message), or may be transmitted by using different signaling (for example, carried in different RRC reconfiguration messages). This is not limited.

In a possible implementation, the correspondence #2 may be a correspondence between the service #1 and the logical channel #2. The logical channel #2 is a logical channel using the resource #2, that is, the resource #2 is used on the logical channel #2. Therefore, based on the correspondence between the service #1 and the logical channel #2, the resource #2 may be used to transmit the service #1. In an example, the correspondence #2 may be a correspondence between a parameter corresponding to the service #1 and the logical channel #2. For example, the correspondence #2 may be a correspondence between a QoS flow corresponding to the service #1 and the logical channel #2.

An example in which the correspondence #2 is the correspondence between the QoS flow corresponding to the service #1 and the logical channel #2 is used. For example, SDAP may perform mapping between a QoS flow and a DRB, so that the network device may indicate, in a SDAP configuration, a correspondence between the QoS flow corresponding to the service #1 and a DRB corresponding to the service #1. SRAP may perform mapping between a DRB and an RLC channel, so that the network device may indicate, in a SRAP configuration, a correspondence between the DRB corresponding to the service #1 and SL RLC corresponding to the service #1, and further indicate, in an SL RLC bearer configuration corresponding to the service #1, a correspondence between the SL RLC channel corresponding to the service #1 and the logical channel #2. Based on the foregoing configuration, the QoS flow corresponding to the service #1 may be associated with the logical channel #2, that is, there is the correspondence between the QoS flow corresponding to the service #1 and the logical channel #2.

630: The network device sends information about the resource #1 to the relay UE. Correspondingly, the relay UE receives the information about the resource #1.

The information about the resource #1 may include configuration information of the resource #1 and the information #1.

In a possible implementation, the information about the resource #1 may be carried in an RRC reconfiguration message and/or DCI.

For example, the network device sends the RRC reconfiguration message to the relay UE, where the RRC reconfiguration message includes the information about the resource #1.

For another example, the information about the resource #1 includes the configuration information of the resource #1, and the configuration information of the resource #1 includes at least one piece of the following information: the time domain offset, time domain resource information, frequency domain resource information, and the antenna port. The network device sends the DCI to the relay UE, where the DCI includes the configuration information of the resource #1.

For another example, the network device sends the RRC reconfiguration message and the DCI to the relay UE, where the RRC reconfiguration message includes some configuration information (for example, the frequency hopping manner, the DMRS configuration, the MCS table, the RBG size, the quantity of HARQ processes, the quantity of repetitions, the redundancy version used during repeated sending, the resource allocation type, precoding, the quantity of layers, and the SRS resource indicator) of the resource #1, and the DCI includes remaining configuration information (for example, the time domain offset, time domain resource information, frequency domain resource information, and the antenna port) of the resource #1.

The information #1 indicates that the resource #1 is used to transmit the data of the service #1. In a possible form, the information #1 indicates that a logical channel #1 (an example of a second logical channel) uses the resource #1, or the information #1 indicates that a logical channel #1 is allowed to use the resource #1. The logical channel #1 is a corresponding logical channel for transmitting the data of the service #1 between the relay UE and the network device. For a form of the information #1, refer to related descriptions of the information #2 in step 620. Details are not described herein again.

Optionally, there is a correspondence (an example of a second correspondence, denoted as a correspondence #1 for differentiation) between the service #1 and the resource #1. Therefore, based on the correspondence between the service #1 and the resource #1, the resource #1 may be used to transmit the service #1. Further, optionally, the network device further sends the correspondence #1 to the relay UE. The correspondence #1 and the information about the resource #1 may be transmitted by using a same piece of signaling (for example, carried in a same RRC reconfiguration message), or may be transmitted by using different signaling (for example, carried in different RRC reconfiguration messages). This is not limited.

In a possible implementation, the correspondence #1 may be a correspondence between the service #1 and the logical channel #1. The logical channel #1 is a logical channel using the resource #1, that is, the resource #1 is used on the logical channel #1. Therefore, based on the correspondence between the service #1 and the logical channel #1, the resource #1 may be used to transmit the service #1. In an example, the correspondence #1 may be a correspondence between the parameter corresponding to the service #1 and the logical channel #1. For example, the correspondence #1 may be a correspondence between the DRB corresponding to the service #1 and the logical channel #1.

An example in which the correspondence #1 is the correspondence between the DRB corresponding to the service #1 and the logical channel #1 is used. For example, SRAP may perform mapping between a DRB and an RLC channel, so that the network device may indicate, in the SRAP configuration, a correspondence between a DRB (that is, the DRB corresponding to the service #1) of the remote UE and the logical channel #1 for the relay UE.

Optionally, before step 610, the method 600 further includes step 601: The network device determines to configure the resource #1 and the resource #2 for the service #1.

In a possible implementation, the network device determines, based on a service feature of the service #1, to jointly configure the resource #1 and the resource #2 for the service #1. For example, if the network device determines that the service #1 is a periodically transmitted service, the network device jointly configures the resource #1 and the resource #2 for the service #1. For details, refer to related descriptions in the method 500. The details are not described herein again.

It may be understood that the correspondence #2 and the correspondence #1 respectively mentioned in step 620 and step 630 are merely a possible case. This is not limited. A solution in which the resource #1 and the resource #2 can be used to transmit the data of the service #1 based on the correspondence #1 and the correspondence #2 is applicable to this embodiment of this application.

After step 630, the method 600 further includes steps 640 and 650.

640: The remote UE sends the data of the service #1 to the relay UE by using the resource #2.

The remote UE may send the data of the service #1 to the network device via the relay UE. Specifically, the remote UE sends the data of the service #1 to the relay UE by using the resource #2 received in step 620. After receiving the data of the service #1 from the remote UE, the relay UE may forward the data of the service #1 to the network device. Further, the network device may receive the data that is of the service #1 and that is sent by the remote UE.

650: The relay UE forwards the data of the service #1 to the network device by using the resource #1.

Specifically, after receiving the data of the service #1 from the remote UE, the relay UE may forward the data of the service #1 to the network device by using the resource #1 received in step 630.

Based on the foregoing technical solution, the network device may configure the resource #1 (for example, an UL CG configuration) and the resource #2 (for example, an SL CG configuration) for the service #1 of the remote UE. In this way, when sending the data of the service #1 to the network device via the relay UE, the remote UE may directly transmit the data of the service #1 based on the resource #1 and the resource #2. This can reduce a transmission delay of the data of the service #1 and improve user experience of the remote UE.

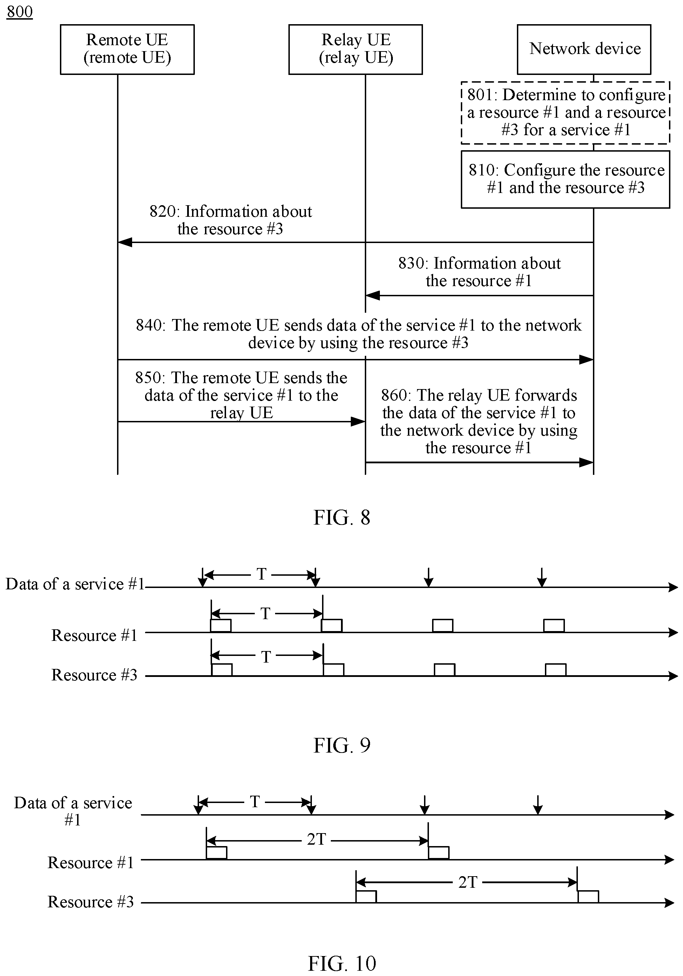

FIG. 8 is a diagram of the data transmission method 800 according to another embodiment of this application. The method 800 may be applicable to the foregoing solution 2, that is, a network device jointly configures a resource #1 and a resource #3. The method 800 may include the following steps.

810: The network device configures the resource #1 and the resource #3.

For a solution related to the resource #1, refer to related descriptions of step 610 in the method 600. Details are not described herein again.

The resource #3 is a resource (or referred to as an UL resource) used to transmit data of a service #1 between a remote UE and the network device. The remote UE may send the data of the service #1 to the network device by using the resource #3. Correspondingly, the network device receives the data of the service #1 from the remote UE by using the resource #3.

Optionally, the resource #3 is an UL CG resource. That the network device configures the resource #3 may be replaced with that the network device performs UL CG configuration. In a possible implementation, for UL CG configuration, refer to a definition in a 3GPP protocol TS 38.331. Details are not described herein again. In an example, configuring the resource #3 includes configuring at least one piece of the following configuration information corresponding to the resource #3: a frequency hopping manner (for example, intra-slot or inter-slot), a DMRS configuration, an MCS table, an RBG size, a quantity of HARQ processes, a quantity of repetitions, a redundancy version used during repeated sending, a resource allocation type, a time domain offset, a time domain resource, a frequency domain resource, an antenna port, precoding, a quantity of layers, and an SRS resource indicator.

As described above, the resource #1 and the resource #3 may be periodic transmission resources. Optionally, a periodicity (referred to as T1 for differentiation) of the resource #1 and a periodicity (referred to as T3 for differentiation) of the resource #3 satisfy any one of the following forms.

Form 1: The periodicity of the resource #1 is the same as the periodicity of the resource #3.

Based on this form, T1=T3.

In a possible case, T1=T3=*f₅*(T), where T represents a periodicity of the service #1, and *f₅*() represents a function. For example, T1=T3=T. For another example, T1=T3=n'*T, where n' is an integer greater than 1. For example, n'=2. For example, if a delay tolerance of the service #1 is high, for example, a PDB is greater than the periodicity of the service #1, T1 and T3 may be greater than T, for example, are n'*T.

FIG. 9 is a diagram of an association relationship between the resource #1 and the resource #3 in time domain.

As shown in FIG. 9, the data of the service #1 is periodically transmitted. To be specific, the remote UE periodically sends the data of the service #1 to the network device, and the periodicity is T. The periodicity of the resource #1 in time domain is T, and the periodicity of the resource #3 in time domain is also T.

FIG. 10 is another diagram of an association relationship between the resource #1 and the resource #3 in time domain.

As shown in FIG. 9, the data of the service #1 is periodically transmitted. To be specific, the remote UE periodically sends the data of the service #1 to the network device, and the periodicity is T. The periodicity of the resource #1 in time domain is 2T, and the periodicity of the resource #3 in time domain is also 2T.

Form 2: The periodicity of the resource #1 is different from the periodicity of the resource #3.

Based on this form, T1≠T3.

In a possible case, T1=*f₆*(T3), where *f₆*() represents a function. For example, T1=m'*T3, where m' is a number greater than 0. For example, m'=2. For another example, m'=1/2.

In another possible case, T1=*f₇*(T), and T3=*f₈*(T), where T represents a periodicity of the service #1, and *f₇*() and *f₈*() represent different functions. For example, T1=T, and T3=2T. For another example, T1=2T, and T3=T.

Optionally, a time domain start position of the resource #1 is after a time domain start position of the data of the service #1. In this way, after receiving data of the service #1 from the remote UE, a relay UE may have time to process the data by using a corresponding protocol stack, so that the network device can simultaneously receive as much as possible the data that is of the service #1 and that is forwarded by the relay UE and the data that is of the service #1 and that is directly sent by the remote UE.

820: The network device sends information about the resource #3 to the remote UE.

The information about the resource #3 may include configuration information of the resource #3 and information #3.

In a possible implementation, the information about the resource #3 may be carried in an RRC reconfiguration message and/or DCI.

For example, the network device sends the RRC reconfiguration message to the remote UE, where the RRC reconfiguration message includes the information about the resource #3.

For another example, the information about the resource #3 includes the configuration information of the resource #3, and the configuration information of the resource #3 includes at least one piece of the following information: the time domain offset, time domain resource information, frequency domain resource information, and the antenna port. The network device sends the DCI to the remote UE, where the DCI includes the information about the resource #3.

For another example, the network device sends the RRC reconfiguration message and the DCI to the remote UE, where the RRC reconfiguration message includes some configuration information (for example, the frequency hopping manner, the DMRS configuration, the MCS table, the RBG size, the quantity of HARQ processes, the quantity of repetitions, the redundancy version used during repeated sending, the resource allocation type, precoding, the quantity of layers, and the SRS resource indicator) of the resource #3, and the DCI includes remaining configuration information (for example, the time domain offset, time domain resource information, frequency domain resource information, and the antenna port) of the resource #3.

The information #3 indicates that the resource #3 is used to transmit the data of the service #1. In a possible form, the information #3 indicates that a logical channel #3 (an example of a third logical channel) uses the resource #3, or the information #3 indicates that a logical channel #3 is allowed to use the resource #3. The logical channel #3 is a corresponding logical channel for transmitting the data of the service #1 between the remote UE and the network device. For a form of the information #3, refer to related descriptions of the information #2 in step 620. Details are not described herein again.

Optionally, there is a correspondence (an example of a third correspondence, denoted as a correspondence #3 for differentiation) between the service #1 and the resource #3. Therefore, based on the correspondence between the service #1 and the resource #3, the resource #3 may be used to transmit the service #1. Further, optionally, the network device further sends the correspondence #3 to the remote UE. The correspondence #3 and the information about the resource #3 may be transmitted by using a same piece of signaling (for example, carried in a same RRC reconfiguration message), or may be transmitted by using different signaling (for example, carried in different RRC reconfiguration messages). This is not limited.

In a possible implementation, the correspondence #3 may be a correspondence between the service #1 and the logical channel #3. The logical channel #3 is a logical channel using the resource #3, that is, the resource #3 is used on the logical channel #3. Therefore, based on the correspondence between the service #1 and the logical channel #3, the resource #3 may be used to transmit the service #1. In an example, the correspondence #3 may be a correspondence between a parameter corresponding to the service #1 and the logical channel #3. For example, the correspondence #3 may be a correspondence between a QoS flow corresponding to the service #1 and the logical channel #3.

An example in which the correspondence #3 is the correspondence between the QoS flow corresponding to the service #1 and the logical channel #3 is used. For example, the network device may indicate, in a SDAP configuration, a correspondence between the QoS flow corresponding to the service #1 and a DRB corresponding to the service #1, and indicate, in an RLC configuration, a correspondence between the DRB corresponding to the service #1 and the logical channel #3. Based on the foregoing configuration, the QoS flow corresponding to the service #1 may be associated with the logical channel #3, that is, there is the correspondence between the QoS flow corresponding to the service #1 and the logical channel #3.

830: The network device sends information about the resource #1 to the relay UE.

Step 830 is the same as step 630. Details are not described herein again.

Optionally, before step 810, the method 800 further includes step 801: The network device determines to configure the resource #1 and the resource #3 for the service #1.

In a possible implementation, the network device determines, based on a service feature of the service #1, to jointly configure the resource #1 and the resource #3 for the service #1. For example, if the network device determines that the service #1 is a periodically transmitted service, the network device jointly configures the resource #1 and the resource #3 for the service #1. For details, refer to related descriptions in the method 500. The details are not described herein again.

After step 830, the method 800 further includes steps 840 to 860.

840: The remote UE sends the data of the service #1 to the network device by using the resource #3.

Specifically, the remote UE may forward the data of the service #1 to the network device by using the resource #3 received in step 820.

850: The remote UE sends the data of the service #1 to the relay UE.

The remote UE may send the data of the service #1 to the network device via the relay UE. Specifically, the remote UE sends the data of the service #1 to the relay UE. After receiving the data of the service #1 from the remote UE, the relay UE may forward the data of the service #1 to the network device. Further, the network device may receive the data that is of the service #1 and that is sent by the remote UE. A resource used by the remote UE to send the data of the service #1 to the relay UE is not limited.

860: The relay UE forwards the data of the service #1 to the network device by using the resource #1.

Specifically, after receiving the data of the service #1 from the remote UE, the relay UE may forward the data of the service #1 to the network device by using the resource #1 received in step 830.

Optionally, the data that is of the service #1 and that is sent by the remote UE to the network device in step 840 may be the same as or different from the data that is of the service #1 and that is sent by the remote UE to the network device via the relay UE in step 850 and step 860. This is not limited.

In a first possible case, the remote UE sends first data of the service #1 to the network device, and the remote UE sends second data of the service #1 to the network device via the relay UE, where the first data is totally different from the second data.

In a second possible case, the remote UE sends first data of the service #1 to the network device, and the remote UE sends second data of the service #1 to the network device via the relay UE, where the first data is totally the same as the second data. To be specific, the remote UE sends the data of the service #1 to the network device, and the remote UE repeatedly sends the data of the service #1 to the network device via the relay UE.

In a third possible case, the remote UE sends first data of the service #1 to the network device, and the remote UE sends second data of the service #1 to the network device via the relay UE, where the first data is partially the same as the second data.

It can be learned from steps 840 to 860 that the data of the service #1 of the remote UE may be simultaneously transmitted on two paths (dual paths shown in FIG. 2). "Simultaneous" indicates that the data of the service #1 may be transmitted on the two paths, and the data of the service #1 is not limited to being transmitted at a same moment in terms of time. In actual communication, moments at which the data of the service #1 is transmitted on the two paths may be a same moment, or may be different moments. This is not limited.

For example, the foregoing first possible case is used as an example. The data of the service #1 is split at a PDCP layer, some PDCP PDUs are sent to a base station through a Uu interface between the remote UE and the network device, and remaining PDCP PDUs are first sent to the relay UE, and then sent by the relay UE to the network device.

For example, the foregoing second possible case is used as an example. A duplication (duplication) operation may be performed on the data of the service #1 at a PDCP layer, and the same data is separately sent to the network device through the two paths.

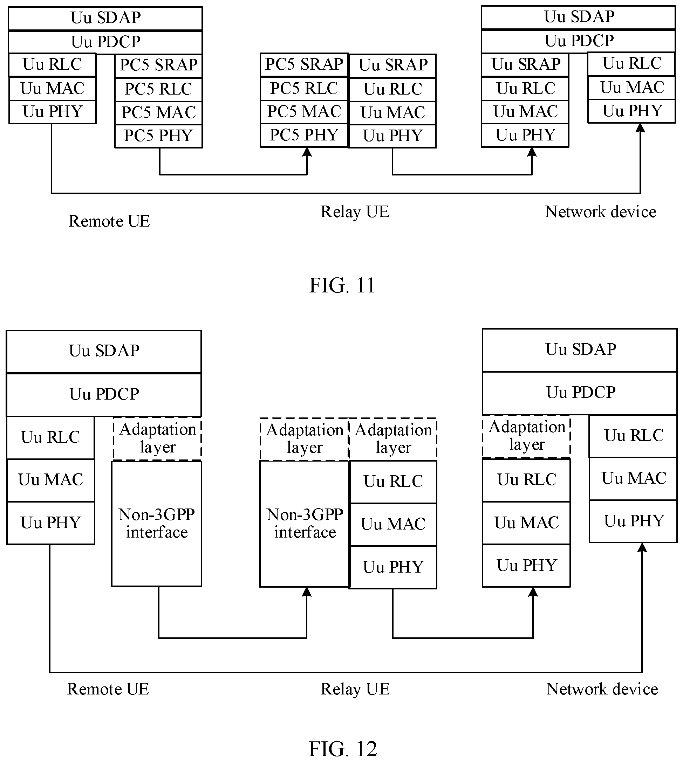

FIG. 11 is a diagram of a protocol stack applicable to an embodiment of this application.

If an interface between the remote UE and the relay UE is a PC5 interface, the data of the service #1 may be transmitted on the two paths based on the protocol stack shown in FIG. 11. The two paths are respectively a path on which the remote UE performs transmission to the network device via the relay UE and a path on which the remote UE directly performs transmission to the network device.

FIG. 12 is another diagram of a protocol stack applicable to an embodiment of this application.

If an interface between the remote UE and the relay UE is a non-3GPP interface, the data of the service #1 may be transmitted on the two paths based on the protocol stack shown in FIG. 12. The two paths are respectively a path on which the remote UE performs transmission to the network device via the relay UE and a path on which the remote UE directly performs transmission to the network device.

Based on the foregoing technical solution, the network device may configure the resource #1 (for example, an UL CG configuration of the relay UE) and the resource #3 (for example, an UL CG configuration of the remote UE) for the service #1 of the remote UE. In this way, when sending the data of the service #1 to the network device via the relay UE and directly sending the data of the service #1 to the network device, the remote UE may directly transmit the data of the service #1 based on the resource #1 and the resource #3. This can reduce a transmission delay of the data of the service #1 and improve user experience of the remote UE.

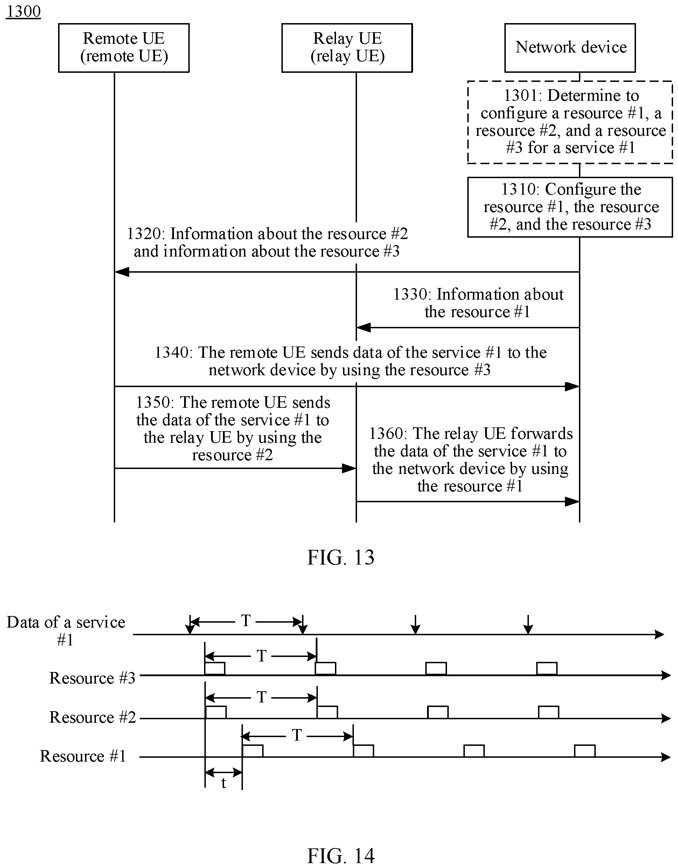

FIG. 13 is a diagram of the data transmission method 1300 according to still another embodiment of this application. The method 1300 may be applicable to the foregoing solution 3, that is, a network device jointly configures a resource #1, a resource #2, and a resource #3. The method 1300 may include the following steps.

1310: The network device configures the resource #1, the resource #2, and the resource #3.

For solutions related to the resource #1 and the resource #2, refer to related descriptions of step 610 in the method 600. Details are not described herein again.

For a solution related to the resource #3, refer to related descriptions of step 810 in the method 800. Details are not described herein again.

As described above, the resource #1, the resource #2, and the resource #3 may be periodic transmission resources. Optionally, a periodicity (referred to as T1 for differentiation) of the resource #1, a periodicity (referred to as T2 for differentiation) of the resource #2, and a periodicity (referred to as T3 for differentiation) of the resource #3 satisfy any one of the following forms.

Form 1: The periodicity of the resource #1, the periodicity of the resource #2, and the periodicity of the resource #3 are the same.

Based on this form, T1=T2=T3.

In a possible case, T1=T2=T3=*f₉*(T), where T represents a periodicity of a service #1, and *f₉*() represents a function. For example, T1=T2=T3=T. For another example, T1=T2=T3=n"*T, where n" is an integer greater than 1. For example, n"=2. For example, if a delay tolerance of the service #1 is high, for example, a PDB is greater than the periodicity of the service #1, T1, T2, and T3 may be greater than T, for example, are n"*T.

FIG. 14 is a diagram of an association relationship between the resource #1, the resource #2, and the resource #3 in time domain.

As shown in FIG. 14, data of the service #1 is periodically transmitted. To be specific, a remote UE periodically sends the data of the service #1 to the network device, and the periodicity is T. The periodicity of the resource #1 in time domain is T, the periodicity of the resource #2 in time domain is also T, and the periodicity of the resource #3 in time domain is also T.

Form 2: The periodicity of the resource #1, the periodicity of the resource #2, and the periodicity of the resource #3 are not all the same (for example, the periodicity of the resource #1, the periodicity of the resource #2, and the periodicity of the resource #3 are all different, or for another example, some of the periodicity of the resource #1, the periodicity of the resource #2, and the periodicity of the resource #3 are the same).

In a possible case, T1*=f₁₀*(T2, T3), where *f₁₀*() represents a function.

In another possible case, T1*=f₁₁*(T), T2*=f₁₁*(T), and T3*=f₁₃*(T), where T represents a periodicity of a service #1. For example, T1=T, T2=T, and T3=2T. For another example, T1=2T, T2=2T, and T3=T.

Optionally, a time domain start position of the resource #1 is after a time domain start position of the resource #2. In this way, after receiving data of the service #1 from the remote UE, a relay UE may have time to process the data by using a corresponding protocol stack. In a possible case, a time gap between the time domain start position of the resource #1 and the time domain start position of the resource #2 is t time units. FIG. 14 is used as an example. As shown in FIG. 14, an interval between the resource #1 and the resource #2 in time domain is t. In other words, an interval between a periodicity boundary of the resource #1 and a periodicity boundary of the resource #2 is t.

1320: The network device sends information about the resource #2 and information about the resource #3 to the remote UE.

It may be understood that the information about the resource #2 and the information about the resource #3 may be transmitted by using a same piece of signaling (for example, carried in a same RRC reconfiguration message), or may be transmitted by using different signaling (for example, carried in different RRC reconfiguration messages). This is not limited.

For step 1320, refer to related descriptions of step 620 and step 820. Details are not described herein again.

1330: The network device sends information about the resource #1 to the relay UE.

For step 1330, refer to related descriptions of step 630. Details are not described herein again.

Optionally, before step 1310, the method 1300 further includes step 1301: The network device determines to configure the resource #1, the resource #2, and the resource #3 for the service #1.

In a possible implementation, the network device determines, based on a service feature of the service #1, to jointly configure the resource #1, the resource #2, and the resource #3 for the service #1. For example, if the network device determines that the service #1 is a periodically transmitted service, the network device jointly configures the resource #1, the resource #2, and the resource #3 for the service #1. For details, refer to related descriptions in the method 500. The details are not described herein again.

Optionally, after step 1330, the method 1300 further includes steps 1340 to 1360.

1340: The remote UE sends data of the service #1 to the network device by using the resource #3.

Specifically, the remote UE may forward the data of the service #1 to the network device by using the resource #3 received in step 1320.

1350: The remote UE sends the data of the service #1 to the relay UE by using the resource #2.

The remote UE may send the data of the service #1 to the network device via the relay UE. Specifically, the remote UE sends the data of the service #1 to the relay UE by using the resource #2. After receiving the data of the service #1 from the remote UE, the relay UE may forward the data of the service #1 to the network device. Further, the network device may receive the data that is of the service #1 and that is sent by the remote UE.

1360: The relay UE forwards the data of the service #1 to the network device by using the resource #1.

Specifically, after receiving the data of the service #1 from the remote UE, the relay UE may forward the data of the service #1 to the network device by using the resource #1 received in step 1330.

Optionally, the data that is of the service #1 and that is sent by the remote UE to the network device in step 1340 may be the same as or different from the data that is of the service #1 and that is sent by the remote UE to the network device via the relay UE in step 1350 and step 1360. This is not limited. For details, refer to the descriptions in the method 800. The details are not described herein again.

Based on the foregoing technical solution, the network device may configure the resource #1 (for example, an UL CG configuration of the relay UE), the resource #2 (for example, an SL CG configuration), and the resource #3 (for example, an UL CG configuration of the remote UE) for the service #1 of the remote UE. In this way, when sending the data of the service #1 to the network device via the relay UE and directly sending the data of the service #1 to the network device, the remote UE may directly transmit the data of the service #1 based on the resource #1, the resource #2, and the resource #3. This can reduce a transmission delay of the data of the service #1 and improve user experience of the remote UE.

It may be understood that the examples in FIG. 6 to FIG. 14 in embodiments of this application are merely intended to help a person skilled in the art understand embodiments of this application, but are not intended to limit embodiments of this application to specific scenarios in the examples. A person skilled in the art may definitely make various equivalent modifications or changes according to the examples shown in FIG. 6 to FIG. 14, and such modifications or changes also fall within the scope of embodiments of this application. For example, the network device may alternatively jointly configure the resource #2 and the resource #3 for the service #1, and the network device sends the resource #2 and the resource #3 to the remote UE. The remote UE sends the data of the service #1 to the relay UE by using the resource #2, so that the relay UE forwards the data of the service #1 to the network device. In addition, the remote UE directly sends the data of the service #1 to the network device by using the resource #3.

It may be further understood that in this embodiment of this application, an example in which the remote UE sends the data to the network device via the relay UE is used for description. It may be understood that the solution in this embodiment of this application may also be applied to a multi-hop relay scenario. For example, the remote UE sends the data to the network device via a plurality of relay UEs.

It may be further understood that this embodiment of this application mainly describes a solution related to a transmission resource of uplink data. This embodiment of this application is not limited thereto. Similarly, for a downlink service (for example, a periodically transmitted downlink service) of the remote UE, the downlink service may be configured to be split and carried, or a PDCP duplication function may be enabled. The network device separately configures downlink SPS resources for the remote UE and the relay UE, and separately sends data of the service to the remote UE and the relay UE by using the downlink SPSs. For a periodicity feature of the SPS resource, refer to the foregoing descriptions, for example, the relationship shown in FIG. 9 or FIG. 10.

It may be further understood that in some of the foregoing embodiments, "jointly configuring a transmission resource for a service" and "jointly configuring a transmission resource for data" are mentioned for a plurality of times. It may be understood that they have a same meaning. For example, "jointly configuring a transmission resource for the service #1" may also be replaced with "jointly configuring a transmission resource for the data of the service #1", or is briefly referred to as "jointly configuring a transmission resource for the data".

It may be further understood that in some of the foregoing embodiments, "transmitting a service (for example, sending the service, or for another example, receiving the service)" is mentioned for a plurality of times. It may be understood that transmitting the service may also be replaced with transmitting data of the service.

It may be further understood that a message name used in some of the foregoing embodiments is merely an example, and does not limit the protection scope of embodiments of this application.

It may be further understood that the formulas used in embodiments of this application are merely examples for description, and do not constitute a limitation on the protection scope of embodiments of this application. In a process in which the foregoing parameters are calculated, calculation may be performed according to the foregoing formulas, calculation may be performed based on variations of the foregoing formulas, or calculation may be performed in another manner, to satisfy a calculation result of the formulas.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that in the foregoing method embodiments, methods and operations implemented by a device may alternatively be implemented by a component (for example, a chip or a circuit) of a device.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the foregoing method embodiments are also applicable to the following apparatus embodiments.

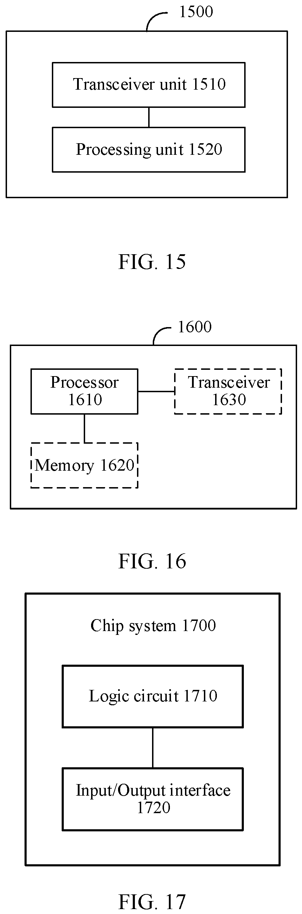

FIG. 15 is a diagram of a data transmission apparatus 1500 according to an embodiment of this application. The apparatus 1500 includes a transceiver unit 1510 and a processing unit 1520. The transceiver unit 1510 may be configured to implement a corresponding communication function. The transceiver unit 1510 may also be referred to as a communication interface or a communication unit. The processing unit 1520 may be configured to implement a corresponding processing function, for example, configure a resource.

Optionally, the apparatus 1500 further includes a storage unit. The storage unit may be configured to store instructions and/or data. The processing unit 1520 may read the instructions and/or the data in the storage unit, so that the apparatus implements actions of a device or a network element in the foregoing method embodiments.

In a first design, the apparatus 1500 may be the network device in the foregoing embodiments, or may be a component (for example, a chip) of the network device. The apparatus 1500 may implement steps or procedures performed by the network device in the foregoing method embodiments. The transceiver unit 1510 may be configured to perform receiving/sending-related operations of the network device in the foregoing method embodiments. The processing unit 1520 may be configured to perform processing-related operations of the network device in the foregoing method embodiments.

In a possible implementation, the transceiver unit 1510 is configured to send information about a first resource to a first terminal device, where the information about the first resource indicates that the first resource is used to transmit a first service of the first terminal device, and the first resource is used to transmit the first service between the first terminal device and a second terminal device. The transceiver unit 1510 is further configured to send information about a second resource to the second terminal device, where the information about the second resource indicates that the second resource is used to transmit the first service, and the second resource is used to transmit the first service between the network device and the second terminal device. The transceiver unit 1510 is further configured to receive the first service from the first terminal device via the second terminal device. Optionally, the processing unit 1520 is configured to configure the first resource and the second resource.

For example, the first service has a first correspondence with the first resource.

For example, the first correspondence is a correspondence between a quality of service QoS flow corresponding to the first service and a first logical channel. The first logical channel is a logical channel using the first resource. The first logical channel is a corresponding logical channel for transmitting data of the first service between the first terminal device and the second terminal device.

Optionally, the transceiver unit 1510 is further configured to send the first correspondence to the first terminal device.

For example, that the information about the first resource indicates that the first resource is used to transmit the first service includes: The information about the first resource indicates that the first logical channel uses the first resource. The first logical channel is the corresponding logical channel for transmitting the data of the first service between the first terminal device and the second terminal device.

For example, the first service has a second correspondence with the second resource.

For example, the second correspondence is a correspondence between a data radio bearer corresponding to the first service and a second logical channel. The second logical channel is a logical channel using the second resource. The second logical channel is a corresponding logical channel for transmitting the data of the first service between the second terminal device and the network device.

Optionally, the transceiver unit 1510 is further configured to send the second correspondence to the second terminal device.

For example, that the information about the second resource indicates that the second resource is used to transmit the first service includes: The information about the second resource indicates that the second logical channel uses the second resource. The second logical channel is the corresponding logical channel for transmitting the data of the first service between the second terminal device and the network device.

Optionally, the transceiver unit 1510 is further configured to send information about a third resource to the first terminal device, where the information about the third resource indicates that the third resource is used to transmit the first service.

For example, the first service has a third correspondence with the third resource.

For example, the third correspondence is a correspondence between the quality of service QoS flow corresponding to the first service and a third logical channel. The third logical channel is a logical channel using the third resource. The third logical channel is a corresponding logical channel for transmitting the data of the first service between the first terminal device and the network device.

Optionally, the transceiver unit 1510 is further configured to send the third correspondence to the first terminal device.

For example, that the information about the third resource indicates that the third resource is used to transmit the first service includes: The information about the third resource indicates that the third logical channel uses the third resource. The third logical channel is the corresponding logical channel for transmitting the data of the first service between the first terminal device and the network device.

For example, a periodicity of the second resource is the same as a periodicity of the first resource, or a periodicity of the second resource is in an integer multiple relationship with a periodicity of the first resource.

For example, the first service is a periodically transmitted service. The periodicity of the second resource and/or the periodicity of the first resource are/is the same as a periodicity of the first service, or the periodicity of the second resource and/or the periodicity of the first resource are/is an integer multiple of a periodicity of the first service.

For example, the first service is a periodically transmitted service. A periodicity of the third resource satisfies at least one of the following: The periodicity of the third resource is the same as a periodicity of the first resource, or the periodicity of the third resource is in an integer multiple relationship with a periodicity of the first resource; the periodicity of the third resource is the same as a periodicity of the second resource, or the periodicity of the third resource is in an integer multiple relationship with a periodicity of the second resource; or the periodicity of the third resource is the same as a periodicity of the first service, or the periodicity of the third resource is an integer multiple of a periodicity of the first service.

For example, a time domain start position of the second resource is after a time domain start position of the first resource.

For example, a time gap between the time domain start position of the second resource and the time domain start position of the first resource is t time units, and t is an integer greater than or equal to 1.

In a second design, the apparatus 1500 may be the terminal device (for example, the first terminal device and the second terminal device in FIG. 5, or for another example, the remote UE and the relay UE in FIG. 6, FIG. 8, and FIG. 13) in the foregoing embodiments, or may be a component (for example, a chip) of the terminal device. The apparatus 1500 may implement steps or procedures performed by the terminal device in the foregoing method embodiments. The transceiver unit 1510 may be configured to perform receiving/sending-related operations of the terminal device in the foregoing method embodiments. The processing unit 1520 may be configured to perform processing-related operations of the terminal device in the foregoing method embodiments.

In a possible implementation, the transceiver unit 1510 is configured to receive information about a first resource from a network device, where the information about the first resource indicates that the first resource is used to transmit a first service of the first terminal device, and the first resource is used to transmit the first service between the first terminal device and the second terminal device. The transceiver unit 1510 is further configured to receive information about a second resource from the network device, where the information about the second resource indicates that the second resource is used to transmit the first service, and the second resource is used to transmit the first service between the network device and the second terminal device. The transceiver unit 1510 is further configured to send the first service to the second terminal device by using the first resource. The transceiver unit 1510 is further configured to receive the first service, and send the first service to the network device by using the second resource.

For example, the first service has a first correspondence with the first resource.

For example, the first correspondence is a correspondence between a quality of service QoS flow corresponding to the first service and a first logical channel. The first logical channel is a logical channel using the first resource. The first logical channel is a corresponding logical channel for transmitting data of the first service between the first terminal device and the second terminal device.

Optionally, the transceiver unit 1510 is further configured to receive the first correspondence from the network device.

For example, that the information about the first resource indicates that the first resource is used to transmit the first service includes: The information about the first resource indicates that the first logical channel uses the first resource. The first logical channel is the corresponding logical channel for transmitting the data of the first service between the first terminal device and the second terminal device.

For example, the first service has a second correspondence with the second resource.

For example, the second correspondence is a correspondence between a data radio bearer corresponding to the first service and a second logical channel. The second logical channel is a logical channel using the second resource. The second logical channel is a corresponding logical channel for transmitting the data of the first service between the second terminal device and the network device.

Optionally, the transceiver unit 1510 is further configured to receive the second correspondence from the network device.

For example, that the information about the second resource indicates that the second resource is used to transmit the first service includes: The information about the second resource indicates that the second logical channel uses the second resource. The second logical channel is the corresponding logical channel for transmitting the data of the first service between the second terminal device and the network device.

Optionally, the transceiver unit 1510 is further configured to: receive information about a third resource from the network device, where the information about the third resource indicates that the third resource is used to transmit the first service; and send the first service to the network device by using the third resource.

For example, the first service has a third correspondence with the third resource.

For example, the third correspondence is a correspondence between the quality of service QoS flow corresponding to the first service and a third logical channel. The third logical channel is a logical channel using the third resource. The third logical channel is a corresponding logical channel for transmitting the data of the first service between the first terminal device and the network device.

Optionally, the transceiver unit 1510 is further configured to receive the third correspondence from the network device.

For example, that the information about the third resource indicates that the third resource is used to transmit the first service includes: The information about the third resource indicates that the third logical channel uses the third resource. The third logical channel is the corresponding logical channel for transmitting the data of the first service between the first terminal device and the network device.

For example, a periodicity of the second resource is the same as a periodicity of the first resource, or a periodicity of the second resource is in an integer multiple relationship with a periodicity of the first resource.

For example, the first service is a periodically transmitted service. The periodicity of the second resource and/or the periodicity of the first resource are/is the same as a periodicity of the first service, or the periodicity of the second resource and/or the periodicity of the first resource are/is an integer multiple of a periodicity of the first service.

For example, the first service is a periodically transmitted service. A periodicity of the third resource satisfies at least one of the following: The periodicity of the third resource is the same as a periodicity of the first resource, or the periodicity of the third resource is in an integer multiple relationship with a periodicity of the first resource; the periodicity of the third resource is the same as a periodicity of the second resource, or the periodicity of the third resource is in an integer multiple relationship with a periodicity of the second resource; or the periodicity of the third resource is the same as a periodicity of the first service, or the periodicity of the third resource is an integer multiple of a periodicity of the first service.

For example, a time domain start position of the second resource is after a time domain start position of the first resource.

For example, a time gap between the time domain start position of the second resource and the time domain start position of the first resource is t time units, and t is an integer greater than or equal to 1.

It should be understood that a specific process in which the units perform the foregoing corresponding steps is described in detail in the foregoing method embodiments. For brevity, details are not described herein.

It should be understood that the apparatus 1500 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described functions. In an optional example, a person skilled in the art may understand that the apparatus 1500 may be specifically the network device in the foregoing embodiments, and may be configured to perform procedures and/or steps corresponding to the network device in the foregoing method embodiments. Alternatively, the apparatus 1500 may be specifically the terminal device in the foregoing embodiments, and may be configured to perform procedures and/or steps corresponding to the terminal device in the foregoing method embodiments. To avoid repetition, details are not described herein again.

The apparatus 1500 in the foregoing solutions has a function of implementing corresponding steps performed by a device (for example, the network device, or for another example, the terminal device) in the foregoing methods. The function may be implemented by hardware, or may be implemented by hardware executing corresponding software. The hardware or the software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to separately perform a sending and receiving operation and a related processing operation in the method embodiments.

In addition, the transceiver unit 1510 may alternatively be a transceiver circuit (for example, may include a receiving circuit and a sending circuit), and the processing unit may be a processing circuit.

It should be noted that the apparatus in FIG. 15 may be a network element or a device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 16 is a diagram of another data transmission apparatus 1600 according to an embodiment of this application. The apparatus 1600 includes a processor 1610. The processor 1610 is configured to execute a computer program or instructions stored in a memory 1620, or read data/signaling stored in a memory 1620, to perform the methods in the foregoing method embodiments. Optionally, there are one or more processors 1610.

Optionally, as shown in FIG. 16, the apparatus 1600 further includes the memory 1620. The memory 1620 is configured to store the computer program or the instructions and/or the data. The memory 1620 and the processor 1610 may be integrated, or may be disposed separately. Optionally, there are one or more memories 1620.

Optionally, as shown in FIG. 16, the apparatus 1600 further includes a transceiver 1630. The transceiver 1630 is configured to receive and/or send a signal. For example, the processor 1610 is configured to control the transceiver 1630 to receive and/or send the signal.

In a solution, the apparatus 1600 is configured to implement operations performed by the network device in the foregoing method embodiments.

For example, the processor 1610 is configured to execute the computer program or the instructions stored in the memory 1620, to implement related operations of the network device in the foregoing method embodiments.

In another solution, the apparatus 1600 is configured to implement operations performed by the terminal device in the foregoing method embodiments.

For example, the processor 1610 is configured to execute the computer program or the instructions stored in the memory 1620, to implement related operations of the terminal device in the foregoing method embodiments, for example, the method performed by the first terminal device and the second terminal device in the embodiment shown in FIG. 5, or the method performed by the remote UE and the relay UE in any one of the embodiments shown in FIG. 6, FIG. 8, and FIG. 13.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be a conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms below: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that the memory described herein is intended to include but is not limited to these and any other appropriate type of memory.

FIG. 17 is a diagram of a chip system 1700 according to an embodiment of this application. The chip system 1700 (or may also be referred to as a processing system) includes a logic circuit 1710 and an input/output interface (input/output interface) 1720.

The logic circuit 1710 may be a processing circuit in the chip system 1700. The logic circuit 1710 may be coupled and connected to a storage unit, and invoke instructions in the storage unit, so that the chip system 1700 can implement the methods and functions in embodiments of this application. The input/output interface 1720 may be an input/output circuit in the chip system 1700, and outputs information processed by the chip system 1700, or inputs to-be-processed data or signaling information to the chip system 1700 for processing.

Specifically, for example, if the chip system 1700 is installed on a network device, the logic circuit 1710 is coupled to the input/output interface 1720, and the logic circuit 1710 may send a resource through the input/output interface 1720, where the resource may be configured by the logic circuit 1710; or the input/output interface 1720 may input related information of a service #1 to the logic circuit 1710 for processing. For another example, if the chip system 1700 is installed on a terminal device, the logic circuit 1710 is coupled to the input/output interface 1720, and the logic circuit 1710 may send data through the input/output interface 1720, where the data may be generated by the logic circuit 1710.

In a solution, the chip system 1700 is configured to implement operations performed by the network device in the foregoing method embodiments.

For example, the logic circuit 1710 is configured to implement processing-related operations performed by the network device in the foregoing method embodiments, and the input/output interface 1720 is configured to implement sending and/or receiving-related operations performed by the network device in the foregoing method embodiments.

In another solution, the chip system 1700 is configured to implement operations performed by the terminal device in the foregoing method embodiments.

For example, the logic circuit 1710 is configured to implement processing-related operations performed by the terminal device in the foregoing method embodiments, for example, processing-related operations performed by the first terminal device and the second terminal device in the embodiment shown in FIG. 5, or processing-related operations performed by the remote UE and the relay UE in any one of the embodiments shown in FIG. 6, FIG. 8, and FIG. 13. The input/output interface 1720 is configured to implement sending and/or receiving-related operations performed by the terminal device in the foregoing method embodiments, for example, sending and/or receiving-related operations performed by the first terminal device and the second terminal device in the embodiment shown in FIG. 5, or sending and/or receiving-related operations performed by the remote UE and the relay UE in any one of the embodiments shown in FIG. 6, FIG. 8, and FIG. 13.

An embodiment of this application further provides a computer-readable storage medium. The computer-readable storage medium stores computer instructions for implementing the methods performed by a device in the foregoing method embodiments.

For example, when a computer program is executed by a computer, the computer is enabled to implement the method performed by the network device in the foregoing method embodiments.

For another example, when a computer program is executed by a computer, the computer is enabled to implement the method performed by the terminal device in the foregoing method embodiments.

An embodiment of this application further provides a computer program product, including instructions. When the instructions are executed by a computer, the method performed by a device (for example, the terminal device, or for another example, the network device) in the foregoing method embodiments is implemented.

An embodiment of this application further provides a communication system, including the foregoing terminal device and network device. Optionally, the system further includes a device that communicates with the foregoing terminal device and/or network device.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be a usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. All variations or replacements readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
sending information about a first resource to a first terminal device, wherein the information about the first resource indicates that the first resource is used to transmit a first service of the first terminal device, and the first resource is used to transmit the first service between the first terminal device and a second terminal device;
sending information about a second resource to the second terminal device, wherein the information about the second resource indicates that the second resource is used to transmit the first service, and the second resource is used to transmit the first service between a network device and the second terminal device; and
receiving the first service from the first terminal device via the second terminal device.

2. The method according to claim 1, wherein the first service has a first correspondence with the first resource.

3. The method according to claim 2, wherein the first correspondence is a correspondence between a quality of service QoS flow corresponding to the first service and a first logical channel, the first logical channel is a logical channel using the first resource, and the first logical channel is a corresponding logical channel for transmitting data of the first service between the first terminal device and the second terminal device.

4. The method according to claim 2 or 3, wherein the method further comprises:
sending the first correspondence to the first terminal device.

5. The method according to any one of claims 1 to 4, wherein that the information about the first resource indicates that the first resource is used to transmit the first service comprises: the information about the first resource indicates that the first logical channel uses the first resource, and the first logical channel is the corresponding logical channel for transmitting the data of the first service between the first terminal device and the second terminal device.

6. The method according to any one of claims 1 to 5, wherein the first service has a second correspondence with the second resource.

7. The method according to claim 6, wherein the second correspondence is a correspondence between a data radio bearer corresponding to the first service and a second logical channel, the second logical channel is a logical channel using the second resource, and the second logical channel is a corresponding logical channel for transmitting the data of the first service between the second terminal device and the network device.

8. The method according to claim 6 or 7, wherein the method further comprises:
sending the second correspondence to the second terminal device.

9. The method according to any one of claims 1 to 8, wherein that the information about the second resource indicates that the second resource is used to transmit the first service comprises: the information about the second resource indicates that the second logical channel uses the second resource, and the second logical channel is the corresponding logical channel for transmitting the data of the first service between the second terminal device and the network device.

10. The method according to any one of claims 1 to 9, wherein the method further comprises:
sending information about a third resource to the first terminal device, wherein the information about the third resource indicates that the third resource is used to transmit the first service, and the third resource is used to transmit the first service between the network device and the first terminal device.

11. The method according to claim 10, wherein the first service has a third correspondence with the third resource.

12. The method according to claim 11, wherein the third correspondence is a correspondence between the quality of service QoS flow corresponding to the first service and a third logical channel, the third logical channel is a logical channel using the third resource, and the third logical channel is a corresponding logical channel for transmitting the data of the first service between the first terminal device and the network device.

13. The method according to claim 11 or 12, wherein the method further comprises:
sending the third correspondence to the first terminal device.

14. The method according to any one of claims 10 to 13, wherein that the information about the third resource indicates that the third resource is used to transmit the first service comprises: the information about the third resource indicates that the third logical channel uses the third resource, and the third logical channel is the corresponding logical channel for transmitting the data of the first service between the first terminal device and the network device.

15. The method according to any one of claims 1 to 14, wherein
a periodicity of the second resource is the same as a periodicity of the first resource, or a periodicity of the second resource is in an integer multiple relationship with a periodicity of the first resource.

16. The method according to any one of claims 1 to 15, wherein the first service is a periodically transmitted service; and
the periodicity of the second resource and/or the periodicity of the first resource are/is the same as a periodicity of the first service, or the periodicity of the second resource and/or the periodicity of the first resource are/is an integer multiple of a periodicity of the first service.

17. The method according to any one of claims 10 to 14, wherein the first service is a periodically transmitted service, and a periodicity of the third resource satisfies at least one of the following:
the periodicity of the third resource is the same as a periodicity of the first resource, or the periodicity of the third resource is in an integer multiple relationship with a periodicity of the first resource;
the periodicity of the third resource is the same as a periodicity of the second resource, or the periodicity of the third resource is in an integer multiple relationship with a periodicity of the second resource; or
the periodicity of the third resource is the same as a periodicity of the first service, or the periodicity of the third resource is an integer multiple of a periodicity of the first service.

18. The method according to any one of claims 1 to 17, wherein a time domain start position of the second resource is after a time domain start position of the first resource.

19. The method according to claim 18, wherein a time gap between the time domain start position of the second resource and the time domain start position of the first resource is t time units, and t is an integer greater than or equal to 1.

20. A data transmission method, comprising:
receiving information about a first resource from a network device, wherein the information about the first resource indicates that the first resource is used to transmit a first service of a first terminal device, and the first resource is used to transmit the first service between the first terminal device and a second terminal device;
receiving information about a second resource from the network device, wherein the information about the second resource indicates that the second resource is used to transmit the first service, and the second resource is used to transmit the first service between the network device and the second terminal device;
sending the first service to the second terminal device by using the first resource; and
receiving the first service, and sending the first service to the network device by using the second resource.

21. The method according to claim 20, wherein the first service has a first correspondence with the first resource.

22. The method according to claim 21, wherein the first correspondence is a correspondence between a quality of service QoS flow corresponding to the first service and a first logical channel, the first logical channel is a logical channel using the first resource, and the first logical channel is a corresponding logical channel for transmitting data of the first service between the first terminal device and the second terminal device.

23. The method according to claim 21 or 22, wherein the method further comprises:
receiving the first correspondence from the network device.

24. The method according to any one of claims 20 to 23, wherein that the information about the first resource indicates that the first resource is used to transmit the first service comprises: the information about the first resource indicates that the first logical channel uses the first resource, and the first logical channel is the corresponding logical channel for transmitting the data of the first service between the first terminal device and the second terminal device.

25. The method according to any one of claims 20 to 24, wherein the first service has a second correspondence with the second resource.

26. The method according to claim 25, wherein the second correspondence is a correspondence between a data radio bearer corresponding to the first service and a second logical channel, the second logical channel is a logical channel using the second resource, and the second logical channel is a corresponding logical channel for transmitting the data of the first service between the second terminal device and the network device.

27. The method according to claim 25 or 26, wherein the method further comprises:
receiving the second correspondence from the network device.

28. The method according to any one of claims 20 to 27, wherein that the information about the second resource indicates that the second resource is used to transmit the first service comprises: the information about the second resource indicates that the second logical channel uses the second resource, and the second logical channel is the corresponding logical channel for transmitting the data of the first service between the second terminal device and the network device.

29. The method according to any one of claims 20 to 28, wherein the method further comprises:
receiving information about a third resource from the network device, wherein the information about the third resource indicates that the third resource is used to transmit the first service; and
sending the first service to the network device by using the third resource.

30. The method according to claim 29, wherein the first service has a third correspondence with the third resource.

31. The method according to claim 30, wherein the third correspondence is a correspondence between the quality of service QoS flow corresponding to the first service and a third logical channel, the third logical channel is a logical channel using the third resource, and the third logical channel is a corresponding logical channel for transmitting the data of the first service between the first terminal device and the network device.

32. The method according to claim 30 or 31, wherein the method further comprises:
receiving the third correspondence from the network device.

33. The method according to any one of claims 29 to 32, wherein that the information about the third resource indicates that the third resource is used to transmit the first service comprises: the information about the third resource indicates that the third logical channel uses the third resource, and the third logical channel is the corresponding logical channel for transmitting the data of the first service between the first terminal device and the network device.

34. The method according to any one of claims 20 to 33, wherein
a periodicity of the second resource is the same as a periodicity of the first resource, or a periodicity of the second resource is in an integer multiple relationship with a periodicity of the first resource.

35. The method according to any one of claims 20 to 34, wherein the first service is a periodically transmitted service; and
the periodicity of the second resource and/or the periodicity of the first resource are/is the same as a periodicity of the first service, or the periodicity of the second resource and/or the periodicity of the first resource are/is an integer multiple of a periodicity of the first service.

36. The method according to any one of claims 29 to 33, wherein the first service is a periodically transmitted service, and a periodicity of the third resource satisfies at least one of the following:
the periodicity of the third resource is the same as a periodicity of the first resource, or the periodicity of the third resource is in an integer multiple relationship with a periodicity of the first resource;
the periodicity of the third resource is the same as a periodicity of the second resource, or the periodicity of the third resource is in an integer multiple relationship with a periodicity of the second resource; or
the periodicity of the third resource is the same as a periodicity of the first service, or the periodicity of the third resource is an integer multiple of a periodicity of the first service.

37. The method according to any one of claims 20 to 36, wherein a time domain start position of the second resource is after a time domain start position of the first resource.

38. The method according to claim 37, wherein a time gap between the time domain start position of the second resource and the time domain start position of the first resource is t time units, and t is an integer greater than or equal to 1.

39. A communication apparatus, wherein the communication apparatus is configured to:
send information about a first resource to a first terminal device, wherein the information about the first resource indicates that the first resource is used to transmit a first service of the first terminal device, and the first resource is used to transmit the first service between the first terminal device and a second terminal device;
send information about a second resource to the second terminal device, wherein the information about the second resource indicates that the second resource is used to transmit the first service, and the second resource is used to transmit the first service between the communication apparatus and the second terminal device; and
receive the first service from the first terminal device via the second terminal device.

40. The communication apparatus according to claim 39, wherein the first service has a first correspondence with the first resource.

41. The communication apparatus according to claim 40, wherein the first correspondence is a correspondence between a quality of service QoS flow corresponding to the first service and a first logical channel, the first logical channel is a logical channel using the first resource, and the first logical channel is a corresponding logical channel for transmitting data of the first service between the first terminal device and the second terminal device.

42. The communication apparatus according to claim 40 or 41, wherein the communication apparatus is further configured to:
send the first correspondence to the first terminal device.

43. The communication apparatus according to any one of claims 39 to 42, wherein that the information about the first resource indicates that the first resource is used to transmit the first service comprises: the information about the first resource indicates that the first logical channel uses the first resource, and the first logical channel is the corresponding logical channel for transmitting the data of the first service between the first terminal device and the second terminal device.

44. The communication apparatus according to any one of claims 39 to 43, wherein the first service has a second correspondence with the second resource.

45. The communication apparatus according to claim 44, wherein the second correspondence is a correspondence between a data radio bearer corresponding to the first service and a second logical channel, the second logical channel is a logical channel using the second resource, and the second logical channel is a corresponding logical channel for transmitting the data of the first service between the second terminal device and the communication apparatus.

46. The communication apparatus according to claim 44 or 45, wherein the communication apparatus is further configured to:
send the second correspondence to the second terminal device.

47. The communication apparatus according to any one of claims 39 to 46, wherein that the information about the second resource indicates that the second resource is used to transmit the first service comprises: the information about the second resource indicates that the second logical channel uses the second resource, and the second logical channel is the corresponding logical channel for transmitting the data of the first service between the second terminal device and the communication apparatus.

48. The communication apparatus according to any one of claims 39 to 47, wherein the communication apparatus is further configured to:
send information about a third resource to the first terminal device, wherein the information about the third resource indicates that the third resource is used to transmit the first service, and the third resource is used to transmit the first service between the communication apparatus and the first terminal device.

49. The communication apparatus according to claim 48, wherein the first service has a third correspondence with the third resource.

50. The communication apparatus according to claim 49, wherein the third correspondence is a correspondence between the quality of service QoS flow corresponding to the first service and a third logical channel, the third logical channel is a logical channel using the third resource, and the third logical channel is a corresponding logical channel for transmitting the data of the first service between the first terminal device and the communication apparatus.

51. The communication apparatus according to claim 49 or 50, wherein the communication apparatus is further configured to:
send the third correspondence to the first terminal device.

52. The communication apparatus according to any one of claims 48 to 51, wherein that the information about the third resource indicates that the third resource is used to transmit the first service comprises: the information about the third resource indicates that the third logical channel uses the third resource, and the third logical channel is the corresponding logical channel for transmitting the data of the first service between the first terminal device and the communication apparatus.

53. The communication apparatus according to any one of claims 39 to 52, wherein
a periodicity of the second resource is the same as a periodicity of the first resource, or a periodicity of the second resource is in an integer multiple relationship with a periodicity of the first resource.

54. The communication apparatus according to any one of claims 39 to 53, wherein the first service is a periodically transmitted service; and
the periodicity of the second resource and/or the periodicity of the first resource are/is the same as a periodicity of the first service, or the periodicity of the second resource and/or the periodicity of the first resource are/is an integer multiple of a periodicity of the first service.

55. The communication apparatus according to any one of claims 48 to 52, wherein the first service is a periodically transmitted service, and a periodicity of the third resource satisfies at least one of the following:
the periodicity of the third resource is the same as a periodicity of the first resource, or the periodicity of the third resource is in an integer multiple relationship with a periodicity of the first resource;
the periodicity of the third resource is the same as a periodicity of the second resource, or the periodicity of the third resource is in an integer multiple relationship with a periodicity of the second resource; or
the periodicity of the third resource is the same as a periodicity of the first service, or the periodicity of the third resource is an integer multiple of a periodicity of the first service.

56. The communication apparatus according to any one of claims 39 to 55, wherein a time domain start position of the second resource is after a time domain start position of the first resource.

57. The communication apparatus according to claim 56, wherein a time gap between the time domain start position of the second resource and the time domain start position of the first resource is t time units, and t is an integer greater than or equal to 1.

58. A communication system, comprising a first terminal device and a second terminal device, wherein the first terminal device is configured to:
receive information about a first resource from a network device, wherein the information about the first resource indicates that the first resource is used to transmit a first service of the first terminal device, and the first resource is used to transmit the first service between the first terminal device and the second terminal device; and
send the first service to the second terminal device by using the first resource; and
the second terminal device is configured to:
receive information about a second resource from the network device, wherein the information about the second resource indicates that the second resource is used to transmit the first service, and the second resource is used to transmit the first service between the network device and the second terminal device; and
receive the first service, and send the first service to the network device by using the second resource.

59. The communication system according to claim 58, wherein the first service has a first correspondence with the first resource.

60. The communication system according to claim 59, wherein the first correspondence is a correspondence between a quality of service QoS flow corresponding to the first service and a first logical channel, the first logical channel is a logical channel using the first resource, and the first logical channel is a corresponding logical channel for transmitting data of the first service between the first terminal device and the second terminal device.

61. The communication system according to claim 59 or 60, wherein the first terminal device is further configured to:
receive the first correspondence from the network device.

62. The communication system according to any one of claims 58 to 61, wherein that the information about the first resource indicates that the first resource is used to transmit the first service comprises: the information about the first resource indicates that the first logical channel uses the first resource, and the first logical channel is the corresponding logical channel for transmitting the data of the first service between the first terminal device and the second terminal device.

63. The communication system according to any one of claims 58 to 62, wherein the first service has a second correspondence with the second resource.

64. The communication system according to claim 63, wherein the second correspondence is a correspondence between a data radio bearer corresponding to the first service and a second logical channel, the second logical channel is a logical channel using the second resource, and the second logical channel is a corresponding logical channel for transmitting the data of the first service between the second terminal device and the network device.

65. The communication system according to claim 63 or 64, wherein the second terminal device is further configured to:
receive the second correspondence from the network device.

66. The communication system according to any one of claims 58 to 65, wherein that the information about the second resource indicates that the second resource is used to transmit the first service comprises: the information about the second resource indicates that the second logical channel uses the second resource, and the second logical channel is the corresponding logical channel for transmitting the data of the first service between the second terminal device and the network device.

67. The communication system according to any one of claims 58 to 66, wherein the first terminal device is further configured to:
receive information about a third resource from the network device, wherein the information about the third resource indicates that the third resource is used to transmit the first service; and
send the first service to the network device by using the third resource.

68. The communication system according to claim 67, wherein the first service has a third correspondence with the third resource.

69. The communication system according to claim 68, wherein the third correspondence is a correspondence between the quality of service QoS flow corresponding to the first service and a third logical channel, the third logical channel is a logical channel using the third resource, and the third logical channel is a corresponding logical channel for transmitting the data of the first service between the first terminal device and the network device.

70. The communication system according to claim 68 or 69, wherein the first terminal device is further configured to:
receive the third correspondence from the network device.

71. The communication system according to any one of claims 67 to 70, wherein that the information about the third resource indicates that the third resource is used to transmit the first service comprises: the information about the third resource indicates that the third logical channel uses the third resource, and the third logical channel is the corresponding logical channel for transmitting the data of the first service between the first terminal device and the network device.

72. The communication system according to any one of claims 58 to 71, wherein
a periodicity of the second resource is the same as a periodicity of the first resource, or a periodicity of the second resource is in an integer multiple relationship with a periodicity of the first resource.

73. The communication system according to any one of claims 58 to 72, wherein the first service is a periodically transmitted service; and
the periodicity of the second resource and/or the periodicity of the first resource are/is the same as a periodicity of the first service, or the periodicity of the second resource and/or the periodicity of the first resource are/is an integer multiple of a periodicity of the first service.

74. The communication system according to any one of claims 67 to 71, wherein the first service is a periodically transmitted service, and a periodicity of the third resource satisfies at least one of the following:
the periodicity of the third resource is the same as a periodicity of the first resource, or the periodicity of the third resource is in an integer multiple relationship with a periodicity of the first resource;
the periodicity of the third resource is the same as a periodicity of the second resource, or the periodicity of the third resource is in an integer multiple relationship with a periodicity of the second resource; or
the periodicity of the third resource is the same as a periodicity of the first service, or the periodicity of the third resource is an integer multiple of a periodicity of the first service.

75. The communication system according to any one of claims 58 to 74, wherein a time domain start position of the second resource is after a time domain start position of the first resource.

76. The communication system according to claim 75, wherein a time gap between the time domain start position of the second resource and the time domain start position of the first resource is t time units, and t is an integer greater than or equal to 1.

77. A communication apparatus, comprising:
a processor, configured to execute a computer program stored in a memory, so that the communication apparatus performs the method according to any one of claims 1 to 19 or the method according to any one of claims 20 to 38.

78. The communication apparatus according to claim 77, wherein the communication apparatus further comprises the memory.

79. A computer-readable storage medium, wherein the computer-readable storage medium stores a computer program, and when the computer program is run on a computer, the computer is enabled to perform the method according to any one of claims 1 to 19 or the method according to any one of claims 20 to 38.

80. A computer program product, wherein the computer program product comprises instructions used to perform the method according to any one of claims 1 to 19 or the method according to any one of claims 20 to 38.

81. A communication system, comprising a first terminal device and a second terminal device, wherein
the first terminal device and the second terminal device are configured to perform the method according to any one of claims 20 to 38.

82. The system according to claim 81, wherein the system further comprises a network device, and the network device is configured to perform the method according to any one of claims 1 to 19.

83. A chip, comprising a logic circuit and an input/output interface, wherein the logic circuit invokes instructions in a storage unit through the input/output interface, to perform the method according to any one of claims 1 to 19 or the method according to any one of claims 20 to 38.
